# EUROPÄISCHE PATENTSCHRIFT

(11) **EP 3 009 728 B1**
(45) Veröffentlichungstag und Bekanntmachung des Hinweises auf die Patenterteilung: **24.04.2019**
(21) Anmeldenummer: 14003554.4
(22) Anmeldetag: 17.10.2014
(51) Int. Cl.: F16M 11/08, A61G 12/00

(54) **Sicherungselement für Stativvorrichtung sowie dazu korrespondierend ausgebildete Komponenten**
Retaining element for stand device and correspondingly formed components
Élément de sécurisation pour dispositif à pied et composants correspondants

(43) Veröffentlichungstag der Anmeldung: 20.04.2016
(73) Patentinhaber: Ondal Medical Systems GmbH, 36088 Hünfeld (DE)
(72) Erfinder: Oginski, Stefan, 36041 Fulda (DE); Höser, Markus, 36142 Tann (DE); Göbel, Andreas, 36132 Eiterfeld (DE)
(74) Vertreter: Graf von Stosch, Andreas

(56) Entgegenhaltungen:
- EP-A1- 0 496 191
- CA-A1- 1 145 736
- DE-U1-202008 012 151
- US-A- 5 704 100

## Beschreibung

Die vorliegende Erfindung betrifft ein Sicherungselement zum Sichern einer Spindel an einer Lagerungseinrichtung, insbesondere Buchse, wobei das Sicherungselement in wenigstens zwei Radialpositionen gesichert werden kann und wenigstens zwei dementsprechend ausgebildete Kupplungsbereiche aufweist. Die vorliegende Beschreibung offenbart ferner zum Sicherungselement korrespondierend ausgebildete Komponenten, insbesondere eine Buchse, einen Deckel für die Buchse sowie ein Kupplungselement. Die vorliegende Beschreibung offenbart nicht zuletzt auch ein Sicherungssystem bzw. einen Sicherungsmechanismus bzw. ein Montageset jeweils umfassend wenigstens ein erfindungsgemäßes Sicherungselement, sowie die entsprechende Stativvorrichtung.

Die vorliegende Erfindung betrifft ein Sicherungselement mit den Merkmalen des Anspruchs 1 und die Stativvorrichtung jeweils mit den Merkmalen des entsprechenden unabhängigen Anspruchs, sowie die Verwendung eines solchen Sicherungselements an einer Stativvorrichtung, insbesondere im Operationssaal. Stative, insbesondere Deckenstative wie z.B. Deckenversorgungseinheiten, Monitorträger, oder so genannte Federarme oder Zentralachsen, weisen meist einen oder mehrere in Bezug auf eine Vertikalposition starr angeordneten oder höhenverstellbaren Träger auf, mittels welchen eine daran befestigte medizintechnische Einrichtung bewegt und positioniert werden kann, z.B. im Operationssaal, insbesondere auch auf einer Intensivstation. An den Stativen sind häufig Versorgungseinheiten montiert, an welchen z.B. medizinisch-elektrische Endgeräte angeordnet sind, die z.B. während einer Operation mit den benötigten Medien versorgt werden. Die Träger oder Versorgungseinheiten sind meist drehbar und/oder höhenverstellbar und/oder um eine zumindest annähernd horizontal ausgerichtete Achse in der Höhe verschwenkbar gelagert. Die Träger können je nach Funktion oder Ausgestaltung auch als Ausleger, Tragarm oder Federarm bezeichnet werden.

Bei solchen Stativen ist eine einfache Montage und/oder eine sichere Verbindung zwischen einzelnen Tragarmen oder an der Schnittstelle zu einer Versorgungseinheit wünschenswert. Insbesondere ist es wichtig, einen Tragarm in einer vordefinierten Axialposition anordnen, lagern und/oder sichern zu können.

Es sind Stative bekannt, bei welchen eine Sicherung z.B. mittels eines aus einer axialen Richtung von oben eingelegten Sicherungsrings oder mittels eines durch eine Hülse gegen eine Verlagerung nach radial außen gesicherten Sicherungselements erfolgen kann, wie im Folgenden kurz beschrieben.

Gemäß einer ersten Variante können Tragarme beispielsweise mittels eines Sicherungsrings gesichert werden, der von oben in eine Nut eines Tragarmzapfens eingreifen kann. Der Sicherungsring kann sich dabei auf einer vorderen Buchse des Tragarms abstützen. Zwischen dem Sicherungsring und der Buchse kann dabei auch eine (Stahl-)Scheibe angeordnet sein, um zu verhindern, dass sich der Sicherungsring bei einer relativen Drehbewegung des Tragarms verhakt. Eine radiale Lagerung des Tragarmzapfens kann dabei über Gleit- oder Wälzlager erfolgen, die in der Buchse eingepresst sind. Diese Art der Sicherung weist meist den Nachteil auf, dass ein Monteur den Sicherungsring nicht sehen kann, insbesondere bei Deckenstativen. Dies führt dazu, dass das Risiko besteht, dass der Sicherungsring nur zum Teil in der Zapfennut sitzt, so dass sich der Sicherungsring möglicherweise löst, was dazu führen kann, dass der gesamte Tragarm herabfällt.

Gemäß einer zweiten Variante kann dem mangelnden Sichtkontakt mit dem Sicherungsring dadurch begegnet werden, dass der Sicherungsring auf einem zusätzlichen rohrförmigen Teil angeordnet wird, welches den Tragarmzapfen dem radial lagert. Dabei erfolgt die Montage, indem der zusätzliche rohrförmige Teil in einen ebenfalls rohrförmigen Absatz des Tragarms geschraubt wird. Der zusätzliche rohrförmige Teil kann bereits am Boden am Tragarm montiert werden, sodass ein korrekter Sitz des Sicherungsrings leichter überprüft werden kann. Allerding muss der zusätzliche rohrförmige Teil anschließend an der (Tragarm-)Buchse befestigt werden, was konstruktive Nachteile mit sich bringen kann. Beispielsweise kann der zusätzliche rohrförmige Teil als Aluminiumstrangpressprofil ausgebildet sein, das mit zwei radialen Schrauben an der Buchse verschraubt wird. Die Belastbarkeit der Verbindung richtet sich jedoch stark nach der Wandstärke des zusätzlichen rohrförmigen Teils verbunden ist. Stabile, belastbare Lösungen sind daher mit hohen Kosten verbunden.

Gemäß einer dritten Variante werden medizintechnische Einrichtungen am Tragarm häufig auch durch ein Sicherungselement gesichert, das in eine seitliche Nut der Buchse eingesteckt wird und unter einen Absatz am Tragarmzapfen eingreift. Mit anderen Worten sind Stative bekannt, bei welchen ein Sicherungselement in einer vordefinierten Radialposition positionierbar ist und mittels einer weiteren Komponente, z.B. einer in axialer Richtung verschiebbaren Hülse, gesichert werden kann. Dabei wird die Sicherungshülse von oben über das Sicherungselement geschoben, um das Sicherungselement zu sichern. Diese Art der Sicherung kann z.B. bei einer in einer Buchse gelagerten Spindel verwendet werden. Die Verwendung eines mittels einer Hülse zu sichernden Sicherungselements weist jedoch meist den Nachteil auf, dass das Sicherungselement bei der Montage herunterfallen kann. Die Montage ist meist aufwändig, weil der Monteur gleichzeitig sowohl die medizintechnische Einrichtung als auch die Hülse halten muss, und währenddessen auch noch das Sicherungselement einsetzen muss. Eine Montage erfordert dann meist mehr als zwei Hände bzw. mindestens zwei Monteure. Zudem verdeckt die Hülse das Sicherungselement, so dass eine Sichtprüfung nicht auf einfache Weise möglich ist.

Bei vorbekannten Stativen ist die Montage vergleichsweise aufwändig oder erfordert sehr konzentriertes Arbeiten, insbesondere auch nicht nur von einem Monteur, sondern von mehreren Monteuren. Bei allen vorgenannten Varianten ist eine strenge Montagereihenfolge einzuhalten.

Aus der EP 0 496 191 A1 ist eine Geräteträgerkupplung für ein an einem vertikal ausgerichteten Tragrohr drehbar aufgehängtes Steuergehäuse oder eine Steuertafel bekannt, welche ein Kupplungsgehäuse aufweist, das einerseits das Tragrohr mittels einer Steck-Schraubverbindung aufnimmt und andererseits ein entgegengesetztes, das Steuergehäuse bzw. die Steuertafel um die vertikale Tragroh-Drehachse drehbar tragendes Drehlager besitzt. Dieses Drehlager wird durch Axial-Radiallageranordnung in dem Kupplungsgehäuse drehbar gehalten. Die Axial-Radiallageranordnung weist dabei einen das Drehlager konzentrisch umgebenden im Kupplungsgehäuse festgelegten Tragring auf, auf dem das Drehlager mit einer umlaufenden Radialfläche hängend abgestützt ist.

Aus der CA 1 145 736 ist eine vertikal justierbare Aufhängungseinheit bekannt, die einen vertikalen Zylinder und ein Bremselement aufweist, welches in dem Zylinder gleitend geführt ist. Das Bremselement beinhaltet ein Paar Kragenelemente, die im Zylinder koaxial geführt sind und sich gegenüberliegende Schrägen aufweisen, die eine Laufbahn für kugelförmige Lager bilden. Die Kragenelemente sind dabei mit einem Griff verbunden und sind aufeinander zu und voneinander weg beweglich, um das Bremselement in dem Zylinder festzuklemmen oder freizugeben in dem Zylinder.

Aus der US 5,704,100 ist ein Montage-Klippsystem bekannt, mittels welchem zwei Fremdoberflächen miteinander verbindbar sind. Das Montage-Klippsystem beinhaltet ein zylindrisches Element mit einem ersten und einem zweiten Ende, wobei das erste Ende dazu ausgelegt ist, das zylindrische Element an einer Fremdoberfläche festzulegen und das zweite Ende dazu ausgelegt ist, an einem Gehäuse anzugreifen. Das Gehäuse hat dazu eine Verbindungsoberfläche, in der ein Schlitz ausgeformt ist, von wo eine Öffnung gegenüber der Verbindungsfläche angeordnet ist. Ein Haltestift ist dazu ausgelegt, in den Schlitz geführt und dadurch am Gehäuse festgelegt zu werden. Der Haltestift kann dabei das zylindrische Element am Gehäuse fixieren, wenn das zylindrische Element in die Gehäuseöffnung eingeführt wird.

Aus der DE 20 2008 012 151 U1 ist ein Klappring zur Anordnung auf einer Welle, einer Walze oder dergleichen bekannt. Der Klappring weist zwei Ringsegemente auf, die einendseitig verschwenkbar miteinander verbunden sind. Der Klappring weist ferner eine Koppeleinrichtung auf, mittels welcher die Ringsegmente anderendseitig lösbar miteinander verbindbar sind.

Es ist eine Aufgabe der vorliegenden Erfindung, eine Komponente, Vorrichtung oder Anordnung für ein Stativ, insbesondere Deckenstativ bereitzustellen, womit eine sichere (Dreh)Lagerung eines Tragarms oder einer medizintechnischen Einrichtung an einem weiteren Tragarm, insbesondere an einer Lagerungseinrichtung, insbesondere Buchse bereitgestellt werden kann, speziell in Verbindung mit einer einfachen, möglichst intuitiven Montage. Insbesondere besteht die Aufgabe darin, eine Anordnung oder Komponenten dafür bereitzustellen, mittels welcher die (De-)Montage eines Tragarms oder irgendeiner weiteren Komponente (insbesondere einer medizintechnischen Einrichtung) am Tragarm derart erleichtert werden kann, dass die (De-)Montage schneller oder auch von nur einer einzigen Person vorgenommen werden kann. Die Aufgabe kann auch darin gesehen werden, eine Vorrichtung oder Anordnung bereitzustellen, mittels welcher eine ordnungsgemäße (De-)Montage auf einfachere Weise durchgeführt und eine Sicherungsfunktion auf einfache Weise überprüft werden kann, insbesondere auch indem einzelne Komponenten der Vorrichtung bereits ab Werk auf in Hinblick auf eine Endmontage zweckdienliche Weise relativ zueinander angeordnet werden.

Diese Aufgabe wird gelöst durch ein Sicherungselement für eine Stativvorrichtung, insbesondere für eine medizintechnische Stativvorrichtung eingerichtet zur Anordnung im Operationssaal und zum Positionieren einer medizintechnischen Einrichtung, umfassend einen Lagerungsabschnitt eingerichtet zum Anordnen des Sicherungselements in einer vordefinierten Axialposition an einer Lagerungseinrichtung, insbesondere Buchse der Stativvorrichtung; und ferner umfassend einen Eingriffsabschnitt eingerichtet zum Zusammenwirken mit einer in der Lagerungseinrichtung um eine Drehachse drehlagerbaren Spindel oder einem Zapfen der Stativvorrichtung, um die Spindel oder den Zapfen in der vordefinierten Axialposition relativ zur Lagerungseinrichtung drehbar innerhalb der Lagerungseinrichtung zu sichern; wobei das Sicherungselement eingerichtet ist, in wenigstens zwei vom Sicherungselement vordefinierten Radialpositionen an der Lagerungseinrichtung gelagert zu sein, und zwar in einer Montagevorbereitungsposition und/oder in einer Sicherungsposition, wobei der Eingriffsabschnitt zum Zusammenwirken mit der Spindel oder dem Zapfen durch Eingriff in radialer Richtung eingerichtet ist, insbesondere in der Sicherungsposition. Das Sicherungselement ist eingerichtet, in wenigstens zwei vordefinierbaren Radialposition angeordnet zu werden und den Eingriffsabschnitt dabei in einer relativen Radialposition zu positionieren. Zwei vordefinierte Radialpositionen liefern Vorteile, insbesondere in Hinblick auf einzelne Montageschritte.

Hierdurch kann eine Montage auf einfache und sichere Weise erfolgen. Ferner kann die Lagerung durch einen vergleichsweise einfach zu verstehenden Mechanismus gesichert werden. Dabei ist der Sicherungsmechanismus aus vergleichsweise einfachen, leicht bedienbaren Komponenten aufgebaut. Die Sicherung kann insbesondere durch ein in das Sicherungselement eingreifenden Stift oder Riegel oder Absatz erfolgen, insbesondere in axialer Richtung. Das Sicherungselement kann dabei manuell betätigt werden, um es zu verlagern, insbesondere durch Druck von außen von einer ersten in eine zweite Radialposition.

Dabei beruht die Erfindung auf dem Konzept, wenigstens zwei Radialpositionen durch das Sicherungselement selbst zu definieren. Das Sicherungselement kann dafür eine bestimmte Kontur oder geometrische Ausgestaltung aufweisen, welche mit der Kontur oder geometrischen Ausgestaltung mindestens einer weiteren Komponente eines Sicherungsmechanismus korrespondiert.

An der Spindel bzw. am Zapfen kann dann eine medizintechnische Einrichtung und/oder ein weiterer Tragarm gelagert werden, insbesondere drehbar.

Die Montagevorbereitungsposition ist dabei bevorzugt eine Halteposition, in welcher das Sicherungselement verlagerbar an der Buchse gehalten wird, insbesondere ohne das Risiko, dass das Sicherungselement herausfällt, sei es während der Montage oder während des Transports. Die Montagevorbereitungsposition kann ein besonders einfaches Lösen eines Sicherungsmechanismus zum Halten des Sicherungselements ermöglichen. Die Montagevorbereitungsposition kann auch als Transportsicherungsposition bezeichnet werden, insbesondere für den Fall dass das Sicherungselement vormontiert an einer Buchse bereitgestellt werden soll. Das Sicherungselement kann auch in der Montagevorbereitungsposition vormontiert sind, was Verwechslung oder fehlerhafte Montage ausschließen kann und den Montageaufwand reduziert. Die Sicherungsposition ist dabei bevorzugt eine Position, in welcher das Sicherungselement unverlagerbar fest an der Buchse gesichert wird.

Als Stativvorrichtung ist dabei bevorzugt eine Vorrichtung zum Halten, ortsfesten Anordnen und/oder Verlagern mindestens einer medizintechnische Einrichtung zu verstehen, die an einer Wand (in einem Wandlager) oder einer Raumdecke oder auch am Boden eines Operationssaals oder irgendeines anderen Raumes für medizinische Zwecke fest montiert oder positioniert werden kann, also z.B. ein Deckenstativ. Die Stativvorrichtung ist dann nicht vollkommen frei im Operationssaal verlagerbar, sondern kann nur in einem bestimmten Aktionsradius verlagert werden, insbesondere relativ zu einem an einer Raumdecke oder Wand des Operationssaals angeordneten Befestigungspunkt bzw. Montagepunkt. Die Stativvorrichtung kann als an einer Raumdecke montierte Deckenversorgungseinheit ausgebildet sein und eine oder mehrere Versorgungskonsolen aufweisen, welche an einem oder zwei Tragarmen gelagert und positionierbar ist. Die Stativvorrichtung kann auch als Monitorträger ausgebildet sein. Die Stativvorrichtung kann auch als so genannter, insbesondere an einer Wand montierter Federarm ausgebildet sein und z.B. eine Leuchte aufweisen. Ein Federarm weist dabei eine bewegbare, insbesondere höhenverstellbare Mechanik auf, die eine Last in verschiedenen Höhen halten kann unter dem Einsatz geringer Bedienkräfte (bis ca. 50 N) manuell verstellbar ist. Die Stativvorrichtung kann auch als so genannte, insbesondere an einer Raumdecke montierte Zentralachse ausgebildet sein und eine Mehrzahl von Tragsystemen mit jeweils mindestens einem Träger aufweisen, an welchem z.B. ein Monitor oder eine Leuchte gelagert ist. Bevorzugt weist die Stativvorrichtung mindestens zwei Tragarme auf.

Als medizintechnische Einrichtung ist dabei bevorzugt eine Versorgungskonsole zu verstehen, mittels welcher Mittel für eine Versorgung eines Patienten und/oder Instrumente für einen Operateur und/oder Licht, Reinluft oder andere im Operationssaal benötigte Medien bereitgestellt werden können. Die medizintechnische Einrichtung weist bevorzugt irgendein Bedienpanel und/oder irgendeine Anzeigevorrichtung zum grafischen Darstellen von z.B. Patientendaten auf.

Als Lagerungsabschnitt ist dabei bevorzugt ein Bereich oder Abschnitt insbesondere des Sicherungselements oder einer der weiteren Komponenten des Sicherungsmechanismus zu verstehen, mittels welchem eine Positionierung und Abstützung in einer vordefinierten Position erfolgen kann, insbesondere in einer vordefinierten Axialposition. Der Lagerungsabschnitt umfasst bevorzugt zwei gegenüberliegende Flächenabschnitte, welche weiter bevorzugt parallel zueinander ausgerichtet sind oder zumindest annähernd dieselbe Kontur oder Geometrie aufweisen. Der Lagerungsabschnitt der einen Komponente ist dabei geometrisch korrespondierend zur Ausgestaltung/Kontur der zu lagernden anderen Komponente ausgebildet.

Als Eingriffsabschnitt ist dabei bevorzugt ein Bereich oder Abschnitt des Sicherungselements zu verstehen, mittels welchem eine erste Komponente in eine zweite Komponente eingreifen kann, um die Relativposition dieser Komponenten zueinander zu definieren, insbesondere auch zu blockieren. Der Eingriffsabschnitt ist bevorzugt als hervorstehender Rand oder hervorstehender Absatz mit einer vordefinierten Mindest-Erstreckung in radialer Richtung ausgebildet. Der Eingriffsabschnitt weist bevorzugt eine Vorderkante auf, welche eine konkave Krümmung entsprechend einem Außendurchmesser der Spindel oder des Zapfens (bzw. einer entsprechenden Nut) aufweist.

Als Spindel ist dabei bevorzugt eine Welle oder Hohlwelle zu verstehen, welche eingerichtet ist, mindestens einen weiteren Tragarm abzustützen und zumindest drehbar zu lagern.

Als Zapfen ist dabei bevorzugt ein zumindest abschnittsweise rotationssymmetrischer Fortsatz oder ein freies Ende zu verstehen, welcher/welches eingerichtet ist, eine medizintechnische Einrichtung abzustützen und zumindest drehbar zu lagern.

Als Axialposition ist dabei bevorzugt eine Position zu verstehen, welche in Bezug auf die von der Buchse definierten Drehachse eine spezifische Anordnung der Spindel entlang der Drehachse beschreibt. Bei Deckenstativen entspricht eine vordefinierte Axialposition einer absoluten Höhenposition oder einer relativen Höhenposition relativ zur jeweiligen Buchse.

Als Radialposition ist dabei bevorzugt eine Position zu verstehen, welche in Bezug auf die von der Buchse definierten Drehachse eine spezifische Anordnung des Sicherungselements in radialer Richtung beschreibt, insbesondere in einer Richtung orthogonal zur axialen Richtung bzw. zur Drehachse.

Als Montagevorbereitungsposition ist dabei bevorzugt eine Position zu verstehen, in welcher die Spindel noch nicht in axialer Richtung gesichert wird, sondern in der Buchse in axialer Richtung positionierbar ist, und in welcher das Sicherungselement derart lagerbar ist, dass das Sicherungselement manuell in die Sicherungsposition verlagert werden kann, insbesondere durch Druck in radialer Richtung. In der Montagevorbereitungsposition wird dabei bevorzugt nur das Sicherungselement selbst gesichert.

Als Sicherungsposition ist dabei bevorzugt eine Position zu verstehen, in welcher eine Bewegung des Sicherungselements vollständig blockiert ist, und in welcher das Sicherungselement eine axiale Bewegung der Spindel blockiert und die Spindel dadurch in der gewünschten Axialposition sichert.

Als Operationssaal ist dabei auch ein Untersuchungsraum oder eine Intensivstation aufzufassen, also ein Raum zum Durchführen medizinischer Behandlungen oder Therapien.

Gemäß einem Ausführungsbeispiel weist das Sicherungselement wenigstens zwei Kupplungsbereiche auf, welche jeweils eine der vordefinierten Radialpositionen definieren. Mit anderen Worten können die Kupplungsbereiche in radialer Richtung versetzt zueinander entsprechend den vordefinierten Radialpositionen angeordnet sein. Diese Anordnung ermöglicht auf einfache Weise, die Radialpositionen durch Eingriff in axialer Richtung direkt am Sicherungselement zu definieren.

Als Kupplungsbereich oder Kupplungspunkt ist dabei bevorzugt ein geometrisch spezifisch ausgebildeter Bereich zu verstehen, welcher insbesondere für Formschluss mit einem Kupplungselement (insbesondere Sicherungsstift) bzw. für Eingriff in axialer Richtung in das Sicherungselement eingerichtet ist. Die Kupplungsbereiche können dabei in vordefinierter Relation zueinander angeordnet sein. Der Kupplungsbereich/-punkt kann z.B. durch ein Loch, einen Vorsprung, einen Absatz, eine Erhebung oder Hinterschneidung, eine Kante oder Fase oder Vertiefung gebildet sein. Das Kupplungselement kann z.B. ein Sicherungsstift sein, insbesondere ein elastisch vorgelagerter Sicherungsstift.

Ein die Montagevorbereitungsposition definierender Kupplungspunkt ist bevorzugt näher zum Eingriffsabschnitt angeordnet als ein die Sicherungsposition definierender Kupplungspunkt. Wenigstens einer der Kupplungspunkte ist bevorzugt als (Durchgangs-)Bohrung ausgebildet.

Bevorzugt sind die Kupplungsbereiche für form- und/oder kraftschlüssiges Zusammenwirken mit einem unabhängig vom Sicherungselement betätigbaren Kupplungselement eingerichtet.

Gemäß einem Ausführungsbeispiel weist das Sicherungselement einen Kupplungsbereich in Form einer (ersten) Aussparung auf, welche eine/die Montagevorbereitungsposition definiert, wobei das Sicherungselement einen Kupplungsbereich in Form einer weiteren (zweiten) Aussparung aufweist, welche eine/die Sicherungsposition definiert, wobei die weitere (zweite) Aussparung bevorzugt größer ist als eine/die (erste) Aussparung. Aussparungen ermöglichen das Blockieren des Sicherungselements in vordefinierten Radialpositionen auf einfache und robuste Weise.

Bevorzugt ist eine die Sicherungsposition definierende Aussparung radial außen von einer die Montagevorbereitungsposition definierenden Aussparung angeordnet. Dies erleichtert den Eingriff des Kupplungselements in axialer Richtung und kann einen einfach aufgebauten Sicherungsmechanismus bereitstellen.

Bevorzugt weist das Sicherungselement Aussparungen in Form von wenigstens zwei Durchgangsbohrungen unterschiedlichen Durchmessers auf, welche in radialer Richtung in Reihe angeordnet sind und die wenigstens zwei Positionen definieren. Gemäß einer Variante sind die Aussparungen in Form von sich längs tangential erstreckenden Schlitzen oder Ausnehmungen ausgebildet, welche geometrisch korrespondierend zu einem Eingriffsabschnitt eines Kupplungselements (z.B. Haken oder Riegel) ausgebildet sind.

Gemäß einem Ausführungsbeispiel weist das Sicherungselement wenigstens einen exzentrisch bezüglich einer Mittenlängsachse des Sicherungselements oder einer Erstreckung des Sicherungselements in Umfangsrichtung (orthogonal zur axialen Richtung) angeordneten Kupplungsbereich auf. Hierdurch kann das Sicherungselement unterschiedliche Funktionen erfüllen, je nachdem, mit welcher nach oben weisenden Seite das Sicherungselement an der Buchse gelagert wird. Mit anderen Worten ist das Sicherungselement bevorzugt seitencodiert, d.h., das Sicherungselement erfüllt unterschiedliche Funktionen, je nachdem, ob es mit einer nach oben oder nach unten ausgerichteten Oberseite an der Buchse gelagert wird. Die Seitencodierung ermöglicht insbesondere eine vereinfachte (De-)Montage, speziell bei wenigstens zwei Sicherungselementen.

Gemäß einem Ausführungsbeispiel weist das Sicherungselement eine Unterseite und eine Oberseite auf, welche geometrisch identisch zueinander ausgebildet sind, wobei das Sicherungselement bevorzugt als plattenförmiges und/oder kreisscheibensegmentförmiges und/oder ringsegmentförmiges Segment ausgebildet ist, insbesondere mit parallel zueinander ausgerichteten Ober- und Unterseiten. Diese Seitensymmetrie ermöglicht, das Sicherungselement entweder mit der Oberseite oder der Unterseite nach oben weisend anzuordnen, wodurch insbesondere die Demontage erleichtert werden kann. Ein solches Sicherungselement kann umgedreht werden und auch in umgedrehter Anordnung an der Buchse gelagert werden.

Bevorzugt weist das Sicherungselement einen radial innen liegenden Eingriffsabschnitt auf, welcher einen Krümmungsradius entsprechend einem Krümmungsradius der Spindel hat. Dies ermöglicht eine sichere Lagerung bei vergleichsweise geringen Flächenkräften.

Gemäß einem Ausführungsbeispiel weist das Sicherungselement eine Lasche auf, die radial außenliegend und gegenüberliegend vom Eingriffsabschnitt angeordnet ist und eine Angriffsfläche zur insbesondere manuellen Betätigung des Sicherungselements in radialer Richtung nach innen oder nach außen bereitstellt. Bevorzugt steht die Lasche in radialer Richtung nach außen vom Lagerungsabschnitt hervor. Gemäß einer Variante steht die Lasche nur in radialer Richtung hervor, nicht aber in axialer Richtung. Gemäß einer weiteren Variante

Das Sicherungssegment kann aus einem Materialstreifen gestanzt oder wasserstrahlgeschnitten sein. Derartige Materialstreifen können für den vorliegenden Zweck vorteilhafter Weise mit einer Seite mit einer speziellen Gleitschicht (z.B. Sinterbronze mit Kunststoff POM) ausgeführt sein, und deshalb auch als Gleitstreifen bezeichnet werden. Die Gleitschicht kann dabei auch Aussparungen aufweisen, welche als Schmierstoff- bzw. Fettdepots dienen können. Unter der Gleitschicht befindet sich ein Trägermaterial, beispielsweise Stahlblech. Mittels der Gleitschicht kann Reibung und Verschleiß gering gehalten werden. Wahlweise kann das Sicherungselement aus Plattenmaterial aus Stahl, Messing oder Bronze gefertigt sein, insbesondere in Hinblick auf kostenoptimierte Ausführungen.

Das Sicherungselement kann Aufsätze oder Kanten oder Ränder aufweisen, an denen es aus einer bestimmten Montageposition herausgezogen werden kann, oder welche ein Rutschen nach innen verhindern können, d.h. eine Art Anschlag. Dabei kann auch ein umgebogener Abschnitt/Rand oder umgebogenes Ende die Funktion eines Anschlags erfüllen. Hervorstehende Ränder können auch seitlich, d.h. in radialer Erstreckungsrichtung vorgesehen sein, insbesondere mit breiterer Geometrie als die korrespondierende Führung in der Buchse, so dass ein zu weites/tiefes Einschieben ausgeschlossen werden kann.

Abgesehen von den zuvor beschriebenen Kupplungsbereichen kann das Sicherungselement auch noch weitere Aussparungen, Hinterschneidungen oder Absätze aufweisen, insbesondere in einem radial außen liegenden Abschnitt/Bereich, beispielsweise um den Eingriff eines Werkzeugs am Sicherungselement zu erleichtern. Erfindungsgemäß ist die Verwendung eines Werkzeugs zur Positionierung/Anordnung des Sicherungselements nicht erforderlich, jedoch kann insbesondere die Demontage erleichtert werden, wenn optional mit einem Werkzeug am Sicherungselement angegriffen werden kann, insbesondere falls das Sicherungselement verkantet oder verhakt sein sollte. Eine derartige weitere Aussparung ist bevorzugt im Bereich einer/der Lasche des Sicherungselements angeordnet.

Weiter offenbart ist ein Deckel für eine Lagerungseinrichtung, insbesondere für eine Buchse einer medizintechnischen Stativvorrichtung zur Anordnung im Operationssaal, wobei der Deckel einen Lagerungsabschnitt eingerichtet zum Anordnen und Abstützen eines Sicherungselements, insbesondere eines erfindungsgemäßen Sicherungselements, in einer vordefinierten Axialposition an der Lagerungseinrichtung und/oder am Deckel, insbesondere an einer Unterseite des Deckels, sowie eingerichtet zum Führen des Sicherungselements in der Axialposition in radialer Richtung aufweist. Der Deckel liefert damit eine Auflagefläche zum Lagern des Sicherungselements oder ist geometrisch korrespondierend zum Sicherungselement ausgebildet. Bevorzugt ist der Deckel eingerichtet, mit der Lagerungseinrichtung ein (Gleit-)Lager für das Sicherungselement zu bilden. Hierdurch kann das Positionieren in unterschiedlichen Radialpositionen erleichtert werden. Bevorzugt ist der Deckel zumindest annähernd kreisrund und weist an der Unterseite eine Außenkontur entsprechend der Außenkontur einer Oberseite der Buchse auf. Der Deckel kann dabei auch ringartig ausgebildet sein, mit einer zumindest annähernd zentrisch angeordneten Durchführung oder Ausnehmung, durch welche z.B. Kabel hindurchgeführt und am Stativ weitergeleitet werden können.

Der Lagerungsabschnitt liegt bevorzugt an einer Unterseite des Deckels und wird bevorzugt durch einen ebenen Flächenabschnitt der Unterseite definiert. Bevorzugt ist am Lagerungsabschnitt in radialer Richtung bzw. orthogonal zur axialen Richtung (entsprechend der durch die Buchse definierten Drehachse) wenigstens ein Absatz oder eine Führungskante vorgesehen, entlang welchem/welcher das Sicherungselement in radialer Richtung verlagerbar ist.

Gemäß einem Ausführungsbeispiel weist der Deckel im Bereich des Lagerungsabschnitts einen Topf oder Dom auf, in welchem ein mit dem Sicherungselement kuppelbares Kupplungselement lagerbar ist, wobei der Topf oder Dom bevorzugt zur elastisch vorgespannten Lagerung des Kupplungselements in axialer Richtung eingerichtet ist. Bevorzugt ist das Kupplungselement derart im Deckel gelagert, dass es für ein Ein- oder Auskuppeln (und damit für entsprechenden Eingriff in das Sicherungselement) in axialer Richtung eingerichtet ist. Bevorzugt ist das Kupplungselement elastisch vorgespannt im Deckel gelagert, insbesondere in axialer Richtung elastisch vorgespannt, wobei das Kupplungselement von oben zugänglich ist, insbesondere um es entgegen einer Vorspannkraft nach oben zu ziehen.

Im Topf oder Dom können ferner Aussparungen vorgesehen sein, welche eine verbesserte Sichtkontrolle der einzelnen Positionen der Sicherungsmechanik ermöglichen. Dies ermöglicht eine noch leichtere Kontrolle durch einen Monteur.

Gemäß einer Variante weist der Deckel keinen Topf oder Dom auf, wobei das Kupplungselement nicht im Deckel gelagert ist, sondern an der Buchse. Diese Variante liefert beispielsweise auch den Vorteil, dass Bauraum in axialer Richtung eingespart werden kann, was insbesondere bei Deckenstativen in gedrungenen Räumen Vorteile liefern kann.

Weiter offenbart ist ein Sicherungssystem zum axialen Positionieren und Sichern einer Spindel oder eines Zapfens an einer Buchse, insbesondere in einem Drehlager, einer insbesondere medizintechnischen Stativvorrichtung, umfassend wenigstens ein Sicherungselement, insbesondere ein erfindungsgemäßes Sicherungselement, einen mit der Buchse kuppelbaren Deckel, insbesondere einem erfindungsgemäßen Deckel, sowie wenigstens ein am Deckel und/oder an der Buchse insbesondere elastisch vorspannbar lagerbares Kupplungselement, welches zwecks Formschluss geometrisch korrespondierend zu wenigstens einem Kupplungsbereich des Sicherungselements ausgebildet ist. Ein derartiges Sicherungssystem bzw. ein derartiger Sicherungsmechanismus ermöglicht eine Sicherung des Sicherungselements auf einfache Weise in wenigstens einer vordefinierbaren Radialposition. Hierbei können auch Vorteile bezüglich einer (De-)Montage realisiert werden. Bevorzugt erfolgt dabei formschlüssiger Eingriff in axialer Richtung.

Bevorzugt weist der Deckel einen Lagerungsabschnitt auf, welcher geometrisch korrespondierend zu einem/dem Lagerungsabschnitt des Sicherungselements ausgebildet ist und eingerichtet ist, das Sicherungselement in radialer Richtung zu führen und in axialer Richtung in einer vordefinierten Axialposition zu positionieren und abzustützen. Der Lagerungsabschnitt erleichtert das genaue Positionieren und Ausrichten des Sicherungselements. Insbesondere kann das Sicherungselement dabei sichtbar bleiben, so dass eine Sichtprüfung erfolgen kann. Dabei kann die Montage werkzeuglos erfolgen, insbesondere ohne zusätzliche Befestigungsmittel. Ein Monteur kann das Sicherungselement manuell betätigen, insbesondere in radialer Richtung verlagern. Eine in axialer Richtung verschiebbare Hülse, welche zusätzlich befestigt werden müsste, ist nicht erforderlich.

Gemäß einer Variante ist das Sicherungselement in der Montagevorbereitungsposition mittels des Kupplungselements am Deckel gelagert, insbesondere auch in einem vormontierten Zustand, z.B. während des Transports. Dabei kann das Kupplungselement in der Montagevorbereitungsposition zumindest auch kraftschlüssig mit dem Sicherungselement zusammenwirken. Im Gegensatz dazu wirkt das Kupplungselement in der Sicherungsposition im Wesentlichen formschlüssig, und wahlweise zusätzlich auch kraftschlüssig. Der Formschluss in der Sicherungsposition kann ein hohes Maß an Sicherheit liefern. Das Sicherungselement kann aus der Montagevorbereitungsposition beispielsweise durch Druck nach radial innen in die Sicherungsposition verlagert werden, ohne weitere Komponenten betätigen zu müssen.

Gemäß einem Ausführungsbeispiel stellt das Sicherungssystem mittels des Kupplungselements und des Sicherungselements einen selbstsichernden Sicherungsmechanismus bereit, insbesondere basierend auf einer elastisch vorgespannten/vorspannbaren Anordnung des Kupplungselements, bei welchem Sicherungsmechanismus das Sicherungselement durch Formschluss in axialer Richtung in einer vordefinierbaren Radialposition, insbesondere in einer/der Sicherungsposition, blockierbar ist. Durch die selbstsichernde Funktion und insbesondere auch die elastisch vorgespannte Lagerung kann nicht nur die Sicherheit erhöht werden, sondern auch die Montage erleichtert werden und ein einfach aufgebauter und leicht überprüfbarer Mechanismus bereitgestellt werden.

Dabei kann das Sicherungselement insbesondere zumindest teilweise durch Kraftschluss in einer weiteren vordefinierbaren Radialposition, insbesondere in einer/der Montagevorbereitungsposition, in radialer Richtung verlagerbar anordenbar sein. Dies erleichtert die Montage und ermöglicht das Einstellen einer bestimmten Sicherungsfunktion von mehreren Sicherungsfunktionen.

Weiter offenbart ist eine Buchse für eine medizintechnisehe Stativvorrichtung, wobei die Buchse eine Drehachse für eine Drehbewegung einer Spindel oder eines Zapfen der Stativvorrichtung definiert, wobei die Buchse einen Lagerungsabschnitt eingerichtet zum Anordnen und axialen Abstützen eines Sicherungselements, insbesondere eines erfindungsgemäßen Sicherungselements, in einer vordefinierten Axialposition an der Buchse sowie eingerichtet zum Führen des Sicherungselements in radialer Richtung zumindest annähernd orthogonal zur Drehachse aufweist, wobei die Buchse einen Kupplungspunkt oder -bereich aufweist, in welchem ein mit dem Sicherungselement kuppelbares Kupplungselement zur Sicherung des Sicherungselements lagerbar ist. Mittels des Lagerungsabschnitts ist die Buchse eingerichtet, das Sicherungselement in wenigstens zwei vordefinierten Radialpositionen zu lagern, insbesondere in einer Montagevorbereitungsposition und in einer Sicherungsposition, bevorzugt in einer einzigen unveränderten, konstanten durch die Buchse vordefinierten Axialposition.

Im Kupplungspunkt oder -bereich kann das Kupplungselement beispielsweise formschlüssig durch Eingriff in axialer Richtung gelagert sein, insbesondere bei einer Anordnung des Kupplungspunktes an einer Oberseite der Buchse. Der Kupplungspunkt kann z.B. auch als ein an einer Außenmantelfläche der Buchse vorgesehenes Dreh- oder Schwenklager für ein Kupplungselement in Form eines Riegels ausgebildet sein.

Die Buchse kann beispielsweise als Tragarmbuchse zur Lagerung eines Tragarms ausgebildet sein, oder als ("Zapfen"-)Buchse zur Lagerung einer medizintechnischen Einrichtung wie z.B. eines Monitors oder einer Versorgungskonsole.

Bevorzugt weist die Buchse ein Drehlager mit einzelnen Lagerelementen für eine Drehlagerung der Spindel bzw. des Zapfens auf. Die Lagerelemente können z.B. als Lagerringe mit Rollen oder Kugeln ausgebildet sein und an einer Innenmantelfläche der Buchse montiert sein, z.B. eingepresst sein.

Gemäß einem Ausführungsbeispiel ist die Buchse eingerichtet, mit einem Deckel ein (Gleit)Lager für das Sicherungselement zu bilden, wobei die Buchse bevorzugt an einer Oberseite eine Auflagefläche aufweist, die zumindest abschnittsweise geometrisch korrespondierend zu einer Unterseite des Deckels ausgebildet ist. Hierdurch kann ein Lagerungsabschnitt bzw. eine Aufnahme für das erfindungsgemäße Sicherungselement bereitgestellt werden.

Bevorzugt ist das Kupplungselement am/im Deckel derart lagerbar, insbesondere elastisch vorgespannt in einem Topf oder Dom des Deckels, dass das Kupplungselement mittels des Deckels an der Oberseite der Buchse in Eingriff mit der Buchse bringbar ist.

Gemäß einer Variante weist die Buchse ein Drehlager zur Lagerung eines Kupplungselements (Riegel, Haken) auf, insbesondere an einer Seitenfläche. Mit anderen Worten: Das Kupplungselement muss nicht notwendigerweise im Deckel gelagert sein, sondern kann auch an der Buchse gelagert sein, insbesondere seitlich an einer Außenmantelfläche der Buchse. Das Drehlager kann beispielsweise durch eine Sacklochbohrung gebildet sein, insbesondere um es auf einfache und kostengünstige Weise bereitstellen zu können. Das Drehlager kann auch als Schwenklager beschrieben werden, insbesondere für den Fall, dass das Kupplungselement nur um einen Schwenkwinkel von z.B. 10 bis 30° schwenkbar gelagert sein soll. Bevorzugt ist das Kupplungselement um eine Dreh-/Schwenkachse lagerbar, welche in radialer Richtung orthogonal zur von der Buchse für die Spindel definierten Drehachse ausgerichtet ist. Bevorzugt weist die Buchse im Bereich des Lagers für das Kupplungselement auch Befestigungsmittel für einen Kraftspeicher auf, z.B. für eine Schenkelfeder. Unabhängig davon, ob das Kupplungselement im Deckel oder an der Buchse gelagert ist, und unabhängig davon, ob das Kupplungselement lediglich translatorisch in axialer Richtung oder schwenkbar gelagert ist, ist das Kupplungselement bevorzugt in axialer Richtung elastisch vorgespannt gelagert.

Weiter offenbart ist ein Montageset umfassend wenigstens eine Lagerungseinrichtung, insbesondere eine Buchse, wenigstens ein Sicherungselement, insbesondere ein erfindungsgemäßes Sicherungselement, sowie wenigstens ein Kupplungselement, wobei die Lagerungseinrichtung einen Lagerungsabschnitt eingerichtet zum Anordnen und axialen Abstützen des Sicherungselements in einer vordefinierten Axialposition an der Lagerungseinrichtung aufweist, wobei zumindest das Sicherungselement und das Kupplungselement eingerichtet sind, zur Definition von wenigstens zwei Radialpositionen des Sicherungselements relativ zur Lagerungseinrichtung durch zumindest formschlüssigen Eingriff ineinander zusammenzuwirken, insbesondere in einer Montagevorbereitungsposition und/oder in einer Sicherungsposition. Hierdurch ergeben sich die bereits beschriebenen Vorteile.

Bevorzugt kann das Kupplungselement auch mit der Buchse zumindest formschlüssig zusammenwirken.

Das Montageset kann ferner wenigstens einen Deckel umfassen, in welchem das wenigstens eine Kupplungselement gelagert ist, insbesondere in axialer Richtung elastisch vorgespannt.

Gemäß einer Variante ist das Sicherungselement in der Montagevorbereitungsposition mittels des Kupplungselements am Deckel gelagert, insbesondere auch in einem vormontierten Zustand, z.B. während des Transports.

Eine elastisch vorgespannte Lagerung des Kupplungselements kann die (De-)Montage erleichtern. Werkzeuge sind nicht notwendigerweise erforderlich, ebenso wenig irgendwelche Befestigungsmittel. Beispielsweise kann komplett auf Schrauben verzichtet werden. Drehmomente oder Anzugskräfte von irgendwelchen Befestigungsmitteln müssen nicht beachtet werden. Die elastisch vorgespannte Lagerung ermöglicht dabei auch eine Sichtkontrolle und/oder akustische Kontrolle, insbesondere bei einem Einrastmechanismus bei Sicherungsstiften oder einem Riegel.

Eine manuelle Verlagerung des Kupplungselements entgegen der Vorspannkraft kann das Sicherungselement wieder frei geben, so dass das Sicherungselement manuell entfernt werden kann oder in einer anderen der vordefinierten Radialpositionen positioniert werden kann.

Gemäß einer Variante ist das Sicherungselement in der Montagevorbereitungsposition mittels des Kupplungselements am Deckel gelagert, insbesondere auch in einem vormontierten Zustand, z.B. während des Transports.

Bevorzugt sind das Kupplungselement, das Sicherungselement, der Deckel und/oder die Buchse eingerichtet, das Sicherungselement in der Montagevorbereitungsposition zumindest auch kraftschlüssig zu lagern, und in der Sicherungsposition im Wesentlichen formschlüssig zu lagern.

Der Kraftschluss in der Montagevorbereitungsposition/Transportsicherungsposition kann dabei eine auf das Sicherungselement ausgeübte Vorspannkraft bereitstellen, insbesondere eine Vorspannkraft in axialer Richtung, wobei der Kraftschluss auch derart erfolgen kann, dass Formschluss nicht erforderlich ist oder nur unterstützend in Verbindung mit Kraftschluss vorliegt. Ein eventuell zusätzlich vorliegender Formschluss blockiert das Sicherungselement nicht. Die kraftschlüssige Lagerung in der Montagevorbereitungsposition ermöglicht das einfache Betätigen des Sicherungselements. Insbesondere muss nur eine Mindestkraft überwunden werden, um das Sicherungselement in radialer Richtung in die Sicherungsposition zu schieben, was einhändig erfolgen kann.

Der Formschluss in der Sicherungsposition kann ein hohes Maß an Sicherheit liefern, und zwar unabhängig von der Vorspannkraft irgendeines elastischen Kraftspeichers. Der Formschluss blockiert das Sicherungselement. Ein Kraftschluss ist dabei nicht mehr notwendigerweise erforderlich. Zwar kann das Kupplungselement auch in der Sicherungsposition noch elastisch vorgespannt sein, jedoch übt das Kupplungselement nicht notwendigerweise noch eine Vorspannkraft auf das Sicherungselement aus.

Die zuvor genannte Aufgabe wird auch gelöst durch eine Stativvorrichtung, insbesondere medizintechnische Stativvorrichtung zur Anordnung im Operationssaal, mit wenigstens einem erfindungsgemäßen Sicherungselement, ferner umfassend wenigstens eine Buchse und wenigstens eine(n) in der Buchse drehgelagerte Spindel oder Zapfen jeweils zur Lagerung einer medizintechnischen Einrichtung und/oder eines Tragarms der Stativvorrichtung, wobei die Spindel und/oder der Zapfen mittels des (jeweiligen) Sicherungselements in einer vordefinierten Axialposition relativ zur Buchse gesichert ist, und wobei das Sicherungselement in einer vordefinierten Radialposition mittels wenigstens einem an der Buchse gelagerten und/oder einem an einem an der Buchse montierten Deckel gelagerten Kupplungselement gesichert ist, welches formschlüssig in axialer Richtung in das Sicherungselement eingreift.

Die Stativvorrichtung ist dabei bevorzugt auch zum örtlichen Verlagern, insbesondere sowohl in horizontaler als auch in vertikaler Richtung, einer medizintechnischen Einrichtung im Operationssaal eingerichtet. Die Stativvorrichtung kann ferner eine oder mehrere der weiteren zuvor beschriebenen Komponenten umfassen, insbesondere wenigstens einen/den Deckel und wenigstens ein elastisch vorgespannt gelagertes Kupplungselement.

Die Stativvorrichtung kann ferner insbesondere umfassen: ein Tragsystem umfassend eine Montageeinrichtung zum ortsfesten Positionieren der Stativvorrichtung im Operationssaal, insbesondere an einer Raumdecke, und wenigstens eine in einem Lager und/oder Gelenk, insbesondere Drehgelenk, relativ zu wenigstens einem Tragarm bewegbar gelagerte medizintechnische Einrichtung.

Bevorzugt ist die Stativvorrichtung eingerichtet und zum Positionieren einer medizintechnischen Einrichtung im Operationssaal durch eine Drehbewegung um eine zumindest annähernd vertikal ausgerichtete Achse und wahlweise auch durch eine translatorische Bewegung in einer Richtung parallel zur vertikalen Dache und/oder durch eine Schwenkbewegung, welche eine Höhenposition verändert.

Bevorzugt weist die Stativvorrichtung eine Verkleidung auf, die in Abhängigkeit eines Sicherungszustands montierbar ist. Dies ermöglicht eine Selbstkontrolle in Abhängigkeit eines Sicherungszustands. Ein Monteur wird daran gehindert, die Verkleidung zu montieren, wenn die Spindel bzw. der Zapfen nicht korrekt gesichert ist. Bevorzugt umfasst die Stativvorrichtung hierzu wenigstens ein Kupplungselement, welches einen in einer vordefinierten Position am Kupplungselement angeordneten Befestigungsabschnitt aufweist, der eingerichtet ist, mit Befestigungsmitteln einer Verkleidung gekuppelt zu werden. Der Befestigungsabschnitt und die Befestigungsmittel sind beispielsweise geometrisch korrespondierend zueinander ausgebildet und für gegenseitigen Formschluss eingerichtet.

Die Stativvorrichtung umfasst dabei bevorzugt eine Verkleidung, insbesondere ein oder mehrere Verkleidungsteile, welche jeweils in einer vordefinierten (Höhen- bzw. Axial-) Position angeordnete Befestigungsmittel (z.B. eine Rippe, einen Haken, einen Clip, eine Klemme, eine Rastnase) aufweisen. Mittels des Kupplungselements und der Befestigungsmittel kann dabei eine positionsbezogene Kupplung definiert werden, welche nur dann kuppelbar ist, wenn das Kupplungselement in einer bestimmten Höhenposition angeordnet ist, insbesondere in einer Höhenposition entsprechend einer Eingriffsposition des Kupplungselements in der Buchse. Mit anderen Worten: Die Verkleidung ist nur dann montierbar, wenn eine Radialposition (bevorzugt die Sicherungsposition) des Sicherungselements mittels des Kupplungselements gesichert ist.

Die zuvor genannte Aufgabe wird auch gelöst durch die Verwendung eines erfindungsgemäßen Sicherungselements an einer Buchse zum Sichern einer Spindel oder eines Zapfens in einer vordefinierten Axialposition an der Buchse, insbesondere an einer medizintechnischen Stativvorrichtung eingerichtet zur Anordnung im Operationssaal, wobei das Sicherungselement in einer vordefinierten Axialposition an der Buchse in wenigstens zwei unterschiedlichen mittels des Sicherungselements vordefinierten Radialpositionen lagerbar ist und derart in einer der Radialpositionen angeordnet wird, dass das Sicherungselement in radialer Richtung in die Spindel bzw. den Zapfen eingreift und die Spindel bzw. der Zapfen in axialer Richtung relativ zur Buchse sichert. Hierdurch ergeben sich bereits zuvor beschriebene Vorteile.

Die zuvor genannte Aufgabe wird auch gelöst durch die Verwendung eines erfindungsgemäßen Sicherungselements an einer Buchse als Transportsicherung und angeordnet in einer vordefinierten Radialposition, insbesondere bei einer medizintechnischen Stativvorrichtung eingerichtet zur Anordnung im Operationssaal, wobei das Sicherungselement derart in der vordefinierten Radialposition an der Buchse angeordnet wird, dass das Sicherungselement die Buchse in radialer Richtung nach innen nicht oder nicht weiter überragt als ein Durchmesser einer in der Buchse anordenbaren Spindel bzw. eines Zapfens, wobei das Sicherungselement mittels eines bevorzugt elastisch vorgespannt gelagerten Kupplungselements in der Radialposition gesichert wird, insbesondere durch Eingriff in axialer Richtung. Hierdurch ergeben sich bereits zuvor beschriebene Vorteile.

Die zuvor genannte Aufgabe wird auch gelöst durch die Verwendung eines erfindungsgemäßen Sicherungselements bei der (De-)Montage einer Stativvorrichtung, insbesondere einer Stativvorrichtung eingerichtet zur Anordnung im Operationssaal, wobei das Sicherungselement nacheinander in wenigstens zwei unterschiedlichen vordefinierten Radialpositionen an einer Buchse der Stativvorrichtung positioniert und in der jeweiligen Radialposition gesichert wird, insbesondere bei der Montage zunächst in einer radial weiter außen liegenden Montagevorbereitungsposition und dann in einer radial weiter innen liegenden Sicherungsposition, oder bei der Demontage zunächst in einer umgedrehten Anordnung in einer/der Sicherungsposition und dann in einer/der Montagevorbereitungsposition. Hierdurch ergeben sich bereits zuvor beschriebene Vorteile.

Weiter offenbart ist die Verwendung von wenigstens zwei Sicherungselementen bei der Demontage der Stativvorrichtung, insbesondere durch eine einzelne Person, bevorzugt wenigstens eines erfindungsgemäßen Sicherungselements, wobei von den wenigstens zwei Sicherungselementen zunächst wenigstens ein Sicherungselement in einer umgedrehten ungesicherten Anordnung an einer Buchse der Stativvorrichtung in einer Sicherungsposition angeordnet wird, um eine/die Spindel oder einen/den Zapfen der Stativvorrichtung innerhalb der Buchse zu sichern, während wenigstens ein anderes gesichertes Sicherungselement aus einer regulären, nicht umgedrehten Anordnung entfernt wird, um daraufhin das ungesicherte Sicherungselement zu entfernen, insbesondere einhändig. Durch die Verwendung wenigstens eines Sicherungselements in einer umgedrehten Anordnung kann selbst bei einem elastisch vorgespannten Kupplungselement verhindert werden, dass das Sicherungselement nur durch Betätigen des Kupplungselements entfernt werden kann. Vielmehr kann das Sicherungselement beispielsweise lediglich durch Zugkraft radial nach außen gezogen werden, ohne das Kupplungselement betätigen zu müssen.

Gemäß einer Variante werden zwei Sicherungselemente verwendet, die von zwei voneinander unabhängigen Mechanismen gesichert werden, beispielsweise von einem ersten zumindest formschlüssigen Mechanismus und einem zweiten zumindest kraftschlüssigen Mechanismus. Hierdurch kann noch größere Sicherheit erreicht werden sei es bei Montagevorgängen oder bei der Lagerung im Betrieb.

In den nachfolgenden Zeichnungsfiguren wird die Erfindung anhand von Ausführungsbeispielen näher erläutert. Die in den jeweiligen Ausführungsbeispielen gezeigten Varianten sind dabei miteinander kombinierbar. Beispielsweise kann sowohl an der Buchse als auch am Deckel ein Kupplungselement gelagert sein. Es zeigen:
Figuren 1A, 1B in einer perspektivischen Seitenansicht sowie in einer Draufsicht eine Buchse gemäß einem Ausführungsbeispiel der Erfindung;
Figuren 2A, 2B in zwei perspektivischen Seitenansichten einen Deckel gemäß einem Ausführungsbeispiel der Erfindung zur Anordnung auf der in den Fig. 1A, 1B gezeigten Buchse;
Figuren 3A, 3B, 3C jeweils in einer perspektivischen Seitenansicht ein Sicherungselement gemäß einem Ausführungsbeispiel der Erfindung zur Anordnung an der in den Fig. 1A, 1B gezeigten Buchse bzw. an dem in den Fig. 1A, 1B gezeigten Deckel;
Figur 4 in einer perspektivischen Seitenansicht ein Kupplungselement zur Verwendung am Deckel gemäß einem Ausführungsbeispiel der Erfindung;
Figur 5 in einer perspektivischen Seitenansicht einen oberen Teil einer Spindel bzw. eines Zapfens zur Lagerung in der Buche gemäß einem Ausführungsbeispiel der Erfindung;
Figuren 6A, 6B, 6C in einer perspektivischen Ansicht, einer Schnittansicht sowie einer teilgeschnittenen perspektivischen Ansicht Komponenten eines Montagesets gemäß einem Ausführungsbeispiel der Erfindung, insbesondere die in den Fig. 1A, 1B gezeigte Buchse, den in den Fig. 2A, 2B gezeigten Deckel, zwei Kupplungselemente wie in der Fig. 4 gezeigt, sowie zwei Sicherungselemente wie in der Fig. 3A oder 3B gezeigt;
Figuren 7A, 7B in einer Schnittansicht sowie in einer teilgeschnittenen perspektivischen Ansicht Komponenten einer Stativvorrichtung gemäß einem Ausführungsbeispiel der Erfindung, insbesondere die in den Fig. 6A, 6B, 6C gezeigten Komponenten sowie eine an der Buchse bzw. an den Kupplungselementen montierte Verkleidung;
Figur 8 in einer perspektivischen Seitenansicht ein Kupplungselement zur Verwendung an der Buchse gemäß einem weiteren Ausführungsbeispiel der Erfindung;
Figuren 9A, 9B jeweils in einer perspektivischen Seitenansicht ein Sicherungselement gemäß einem weiteren Ausführungsbeispiel der Erfindung zur Anordnung an der in den Fig. 1A, 1B gezeigten Buchse bzw. an dem in den Fig. 1A, 1B gezeigten Deckel oder an einem Deckel wie in Fig. 10A gezeigt;
Figuren 10A, 10B in einer perspektivischen Ansicht und in einer Schnittansicht Komponenten eines Montagesets gemäß einem weiteren Ausführungsbeispiel der Erfindung in einer Montagevorbereitungsposition, insbesondere die in den Fig. 1A, 1B gezeigte Buchse, einen Deckel, zwei Kupplungselemente wie in Fig. 8 gezeigt, sowie zwei Sicherungselemente wie in der Fig. 9A oder 9B gezeigt;
Figuren 11A, 11B in einer perspektivischen Ansicht und in einer Seitenansicht die Komponenten des in den Fig. 10A, 10B gezeigten Montagesets in einer Sicherungsposition;
Figuren 12A, 12B, 12C, 12D in unterschiedlichen perspektivischen Schnittansichten Komponenten einer Stativvorrichtung gemäß einem weiteren Ausführungsbeispiel der Erfindung, insbesondere die in den Fig. 10A, 10B gezeigten Komponenten sowie eine an der Buchse bzw. an den Kupplungselementen montierte Verkleidung; und
Figuren 13A, 13B in einer perspektivischen Ansicht und in einer Draufsicht jeweils eine Variante des zuvor beschriebenen Deckels bzw. der zuvor beschriebenen Buchse für ein Sicherungselement mit Codierung gemäß einem weiteren Ausführungsbeispiel der Erfindung.

Im Zusammenhang mit der Beschreibung der folgenden Figuren wird bei Bezugszeichen, falls sie in einzelnen Figuren nicht explizit erläutert werden, auf die weiteren Figuren verwiesen.

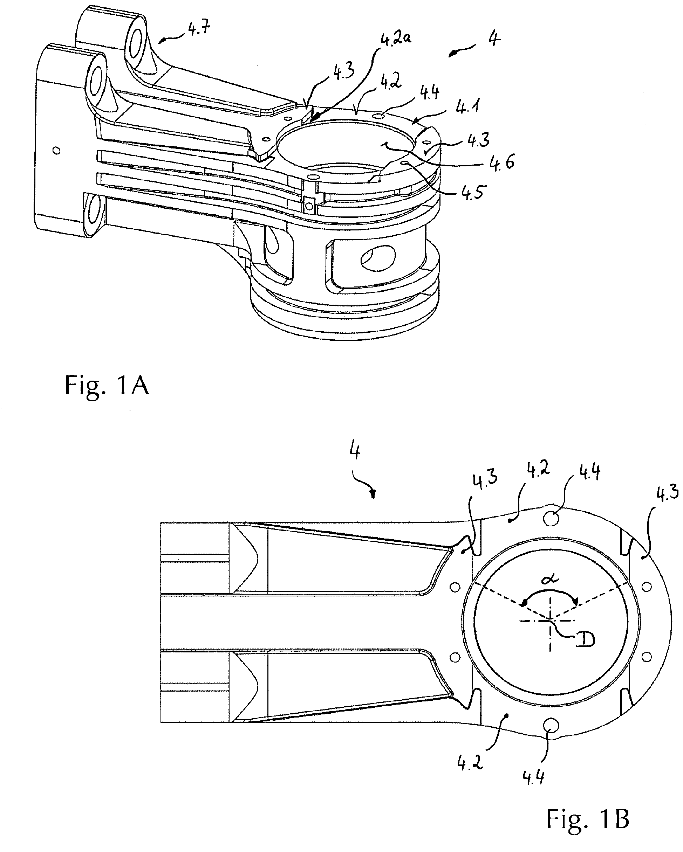

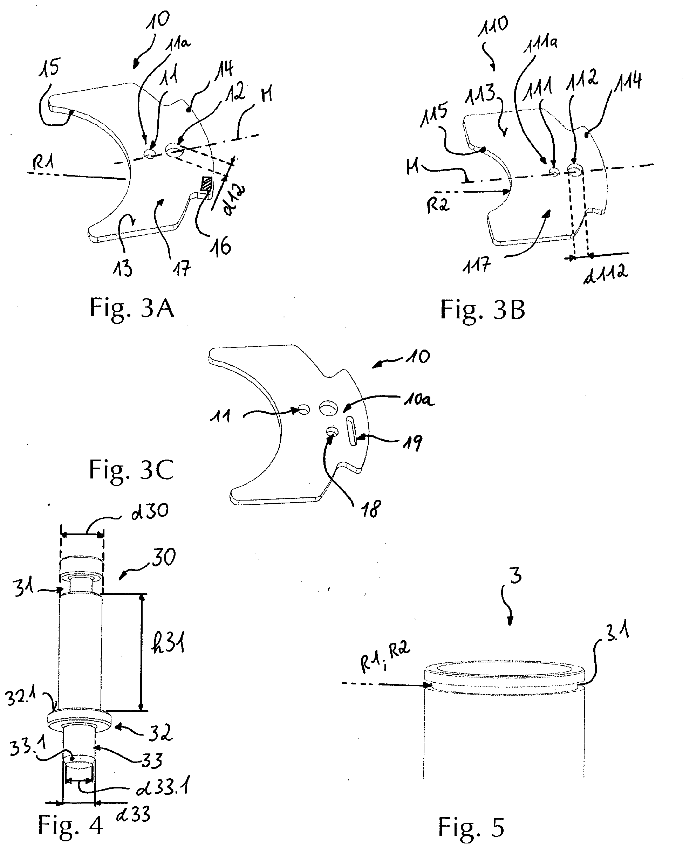

In den Figuren 1A, 1B ist eine Buchse 4 gezeigt, welche eine Drehachse D definiert und ein Drehlager für eine Spindel oder einen Zapfen bereitstellt. An einer Oberseite weist die Buchse 4 eine Ausnehmung 4.1 auf, insbesondere eine Einfräsung oder Vertiefung oder Aussparung, welche einen Lagerungsabschnitt 4.2 bzw. eine Lagerfläche für ein Sicherungselement (vgl. Fig. 3A, 3B) definiert. An diesem Lagerungsabschnitt 4.2 ist das Sicherungselement in radialer Richtung verlagerbar, insbesondere gleitend, und in axialer Richtung (in Bezug auf die Drehachse D) abstützbar. Der Lagerungsabschnitt 4.2 ist eingerichtet, von dem/den Sicherungselement(en) nach unten ausgeübte Lagerkräfte aufzunehmen und in die Buchse 4 weiterzuleiten. Der Lagerungsabschnitt 4.2 erstreckt sich über die komplette Breite des entsprechenden Abschnitts der in diesem Bereich ringförmigen Buchse 4. Mit anderen Worten: Der jeweilige Lagerungsabschnitt 4.2 weist die Form eines Ringsegments auf, zumindest annähernd. Dabei grenzt der Lagerungsabschnitt 4.2 an eine Innenmantelfläche 4.6 der Buchse 4 an, was eine wirkungsvolle, vorteilhafte Kraftübertragung bei geringen Hebellängen ermöglicht.

Der Der Lagerungsabschnitt 4.2 erstreckt sich über einen möglichst großen Kreisbogen a, insbesondere um Flächenpressung oder Flächendruck gering zu halten. Gemäß einer Variante beträgt der Kreisbogen mindestens 90°, 100° oder 110°, bevorzugt im Bereich von 120° bis 150°, wie in Fig. 1B angedeutet. Am Lagerungsabschnitt 4.2 ist ferner ein Kupplungspunkt 4.4 (hier in Form einer Sacklochbohrung) vorgesehen, welcher geometrisch korrespondierend zu einem Kupplungselement (vgl. Fig. 4) ausgebildet ist.

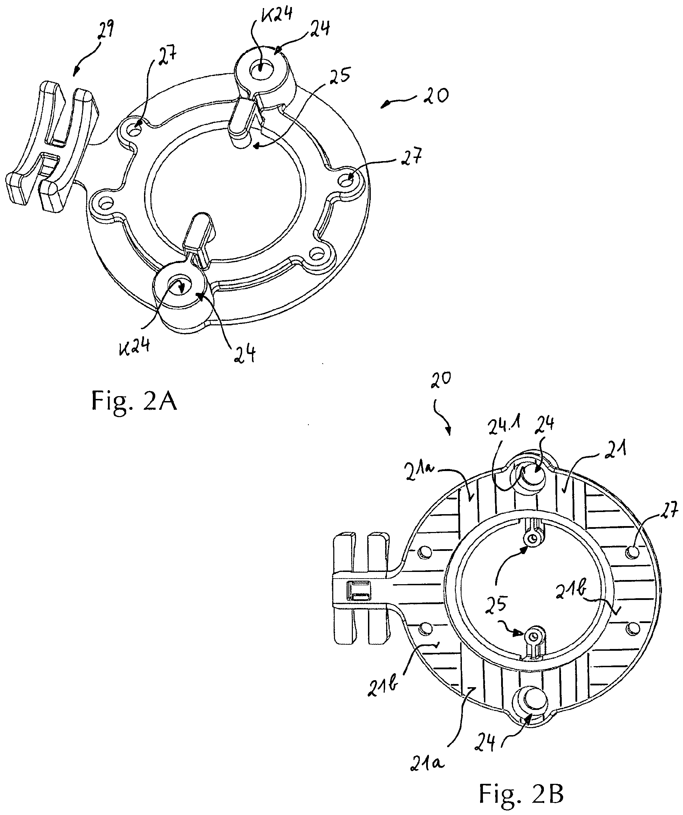

An der Oberseite der Buchse ist ferner eine Auflagefläche 4.3 für einen Deckel (vgl. Fig. 2A, 2B) vorgesehen. Die Auflagefläche 4.3 überragt den Lagerungsabschnitt 4.2 und bildet damit einen Absatz, an welchem das Sicherungselement zentrierbar ist oder entlang welchem das Sicherungselement in radialer Richtung geführt werden kann.

Ferner sind an der Oberseite der Buchse Befestigungsmittel 4.5 (insbesondere Gewindebohrungen) vorgesehen, an welchen der Deckel befestigt werden kann. Mittels eines Montageabschnitts 4.7 kann die Buchse 4 an einen Tragarm montiert, insbesondere geschraubt werden.

In den Figuren 2A, 2B ist ein Deckel 20 gezeigt, welcher eine Ringform aufweist und geometrisch korrespondierend zur Buchse 4 ausgebildet ist, insbesondere an einer Unterseite 21. Die Unterseite 21 ist zumindest abschnittsweise eben und weist zumindest in den mit den Sicherungselementen korrespondierenden Abschnitten Lagerflächen 21a auf, insbesondere ebene Gleitflächenabschnitte. Im Bereich der Lagerflächen 21a sind Aufnahmen 24 jeweils in der Art eines Topfes oder Doms angeordnet, wobei jede Aufnahme 24 eine Kavität K24 zur Aufnahme eines Kupplungselements (vgl. Fig. 4) definiert. Jede Aufnahme 24 weist einen Absatz 24.1 auf, an welchem ein Kraftspeicher (nicht dargestellt), z.B. eine elastisch vorspannbare Druckfeder, abgestützt werden kann. Ein solcher Kraftspeicher kann das Kupplungselement vorspannen und autonom positionieren, insbesondere in Eingriff mit dem jeweiligen Kupplungspunkt 4.4 an der Buchse 4 bringen.

Die Unterseite 21 weist ferner zumindest in den mit den Auflageflächen 4.3 der Buchse 4 korrespondierenden Abschnitten Auflageflächenabschnitte 21b auf. Die Auflageflächenabschnitte 21b sind bevorzugt gegenüberliegend und jeweils zwischen den Lagerflächen 21a angeordnet.

Am Deckel 20 sind Befestigungsmittel 27 (insbesondere Durchgangsbohrungen) vorgesehen, an welchen der Deckel 20 an der Buchse 4 befestigt werden kann. Die Befestigungsmittel 27 sind allesamt im jeweiligen Auflageflächenabschnitt 21b angeordnet, was eine direkte Kraftübertragung und präzise Ausrichtung des Deckels sicherstellen kann, wodurch nicht zuletzt auch die Sicherungselemente auf präzise Weise gelagert bzw. abgestützt werden können.

Der Deckel 20 weist ferner zwei gegenüberliegend im Bereich der Aufnahmen 24 angeordnete Radialfortsätze 25 auf. Die Radialfortsätze können zum Anschrauben eines Teils einer elektrischen Steckkupplung dienen. Eine Kabelaufnahme 29, welche sich in der Art eines radial nach außen weisenden Fortsatzes vom Ringabschnitt des Deckels weg erstreckt, sorgt für eine Lagerung von Kabeln oder Leitungen, welche innerhalb der Buchse geführt werden sollen.

In den Figuren 3A, 3B ist ein Sicherungselement 10; 110 gezeigt, welches jeweils einen ersten Kupplungsbereich 11; 111 und einen zweiten Kupplungsbereich 12; 112 aufweist. Der zweite Kupplungsbereich 12; 112 ist größer als der erste Kupplungsbereich 11; 111 und weist einen Durchmesser d12; d112 auf. Der zweite Kupplungsbereich 12; 112 liegt radial außen vom ersten Kupplungsbereich 11; 111, insbesondere mittig auf einer in radialer Richtung ausgerichteten Mittenlängsachse M des jeweiligen Sicherungselements 10; 110.

Der erste Kupplungsbereich 11; 111 kann dabei einen Transportsicherungsbereich 11a; 111a umfassen oder ausbilden. Der Transportsicherungsbereich 11a; 111a ist eingerichtet, das Sicherungselement 10; 110 während des Transports in einer vordefinierten Radialposition relativ zu einem Deckel und/oder einer Buchse zu positionieren bzw. zu halten. Bevorzugt entspricht die durch den Transportsicherungsbereich 11a; 111a definierte Radialposition der durch den ersten Kupplungsbereich 11; 111 definierten Montagevorbereitungsposition, so dass das Sicherungselement 10; 110 auf einfache Weise direkt nach dem Transport montierbar ist bzw. in der Sicherungsposition anordenbar ist.

Das Sicherungselement 10; 110 ist als plattenartiges Segment mit gegenüberliegenden, zumindest annähernd parallel zueinander ausgerichteten Lagerflächen oder Gleitflächen 13; 113 ausgebildet. Die Gleitflächen 13; 133 können dabei zumindest teilweise einen Lagerungsabschnitt 17; 117 des Sicherungselements 10; 110 definieren. Das jeweilige Sicherungselement 10; 110 weist einen Eingriffsabschnitt 15; 115 auf, welcher eine Krümmung oder konvexe Kante mit einem spezifisch ausgelegten Radius R1; R2 aufweist, die bevorzugt geometrisch korrespondierend zu einer zu sichernden Spindel ausgebildet ist. Der Eingriffsabschnitt 15; 115 ist in einem radial innenliegenden Bereich des Sicherungselement 10; 110 angeordnet. Durch eine Anpassung des Radius R1; R2 kann auf einfache Weise ein geeignetes Sicherungssegment 10; 110 für eine jeweilige Spindel bereitgestellt werden.

An einer radial außen liegenden Kante weist das Sicherungselement eine Lasche 14; 114 auf. Die Lasche ermöglicht eine manuelle Betätigung auf einfache Weise, sei es in einer Richtung radial nach innen oder radial nach außen.

Bei dem in der Fig. 3A gezeigten Sicherungselement 10 ist exemplarisch für jede Ausführungsform des Sicherungselements 10 eine weitere Eingriffsstelle, Aussparung oder Ausnehmung 16 für Montagezwecke angedeutet, insbesondere korrespondierend zu einer Werkzeuggeometrie. Die Eingriffsstelle bzw. der Angriffspunkt 16 ist bevorzugt im Bereich der Lasche 14 angeordnet, d.h. radial außen liegend, insbesondere zwecks guter Erreichbarkeit.

In der Figur 3C ist eine Variante des Sicherungselements 10 gezeigt, bei welcher Kupplungsbereiche exzentrisch angeordnet sind. Hierdurch weist das Sicherungselement 10 eine Seiten-Codierung 10a auf, so dass es eine vordefinierte Oberseite und eine vordefinierte Unterseite aufweist. Ein dritter Kupplungsbereich 18 definiert dabei bevorzugt eine Demontageposition, in welcher das Sicherungselement 10 bei der Demontage gesichert werden kann. Ein Demontage-Schlitz 19 kann dazu dienen, das Sicherungselement 10 auf einfach Weise entfernen zu können, z.B. durch Eingriff mittels eines Schraubendrehers.

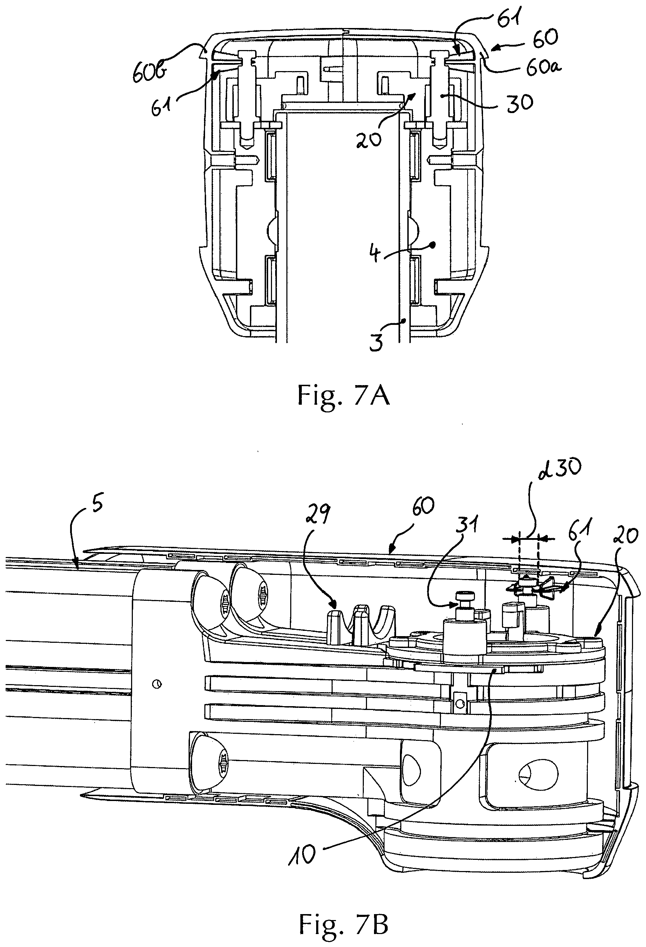

In der Figur 4 ist ein Kupplungselement 30 in Form eines Sicherungsstifts gezeigt, welcher an einem oberen freien Ende bzw. an einem Betätigungsabschnitt einen Durchmesser d30 aufweist. Am Betätigungsabschnitt kann der Sicherungsstift 30 manuell betätigt werden, insbesondere gegen eine Federkraft nach oben gezogen werden. Der Sicherungsstift 30 weist im Bereich des oberen Endes einen Befestigungsabschnitt 31 in Form einer umlaufenden Nut auf. Dieser Befestigungsabschnitt 31 ist eingerichtet, mit einem Verkleidungsteil einer/der Stativvorrichtung zusammenzuwirken, wie im Zusammenhang mit Fig. 7A, 7B näher erläutert. Im Bereich eines unteren Endes weist der Sicherungsstift 30 einen Ringabschnitt 32 mit einer oberen Auflagefläche bzw. einem Absatz auf, an welcher ein Kraftspeicher, insbesondere eine Druckfeder, zur Anlage kommen kann.

Unterhalb vom Ringabschnitt 32 ist ein Eingriffsabschnitt 33 ausgebildet, welcher geometrisch korrespondierend sowohl zur ersten als auch zur zweiten Aussparung 11; 111, 12; 112 des Sicherungselements ausgebildet ist. Der Eingriffsabschnitt 33 weist ein freies Ende 33.1 mit einer spezifischen Geometrie auf, insbesondere eine Fase, welche derart dimensioniert ist, dass das freie Ende 33.1 mit der Fase an der ersten Aussparung 11; 111 aufliegt, jedoch in die zweite Aussparung 12; 112 eingreifen kann. Insbesondere weist der Eingriffsabschnitt 33 einen Durchmesser d33 auf, welcher größer ist als ein Durchmesser der ersten Aussparung 11; 111, jedoch kleiner oder gleich als ein Durchmesser der zweiten Aussparung 12; 112. Ein Durchmesser d33.1 eines freien Endes bzw. einer Stirnseite der Fase 33.1 ist kleiner als der Durchmesser der ersten Aussparung 11; 111. Diese Konfiguration ermöglicht teilweisen Eingriff in die erste Aussparung oder zumindest positionsdefiniertes Aufliegen an der ersten Aussparung 11; 111, ohne dass eine Verlagerung des Sicherungselements blockiert wird.

Die Nut 31 ist in einer vordefinierten Höhe h31 angeordnet, insbesondere in Bezug auf den Ringabschnitt 32 (z.B. die Auflagefläche 32.1). Diese Höhe h31 ist derart dimensioniert, dass ein Sicherungsmechanismus bei der Montage einer Verkleidung bereitgestellt werden kann.

In der Figur 5 ist eine Spindel oder ein Zapfen 3 gezeigt, womit eine Lagerung eines Tragarms oder einer medizintechnischen Einrichtung an einer Buchse erfolgen kann. Die Spindel 3 weist eine Nut 3.1 auf, mittels welcher die Spindel 3 an der Buchse in axialer Richtung gesichert werden kann, indem wenigstens ein Sicherungselement 10; 110 in die Nut 3.1 eingreift. Die Nut 3.1 ist umlaufend vorgesehen und weist einen einheitlichen Durchmesser auf, welcher durch entsprechende Radien R1; R2 beschrieben werden kann. Die Radien R1; R2 entsprechen bevorzugt jenen Radien des jeweiligen Sicherungselements 10; 110, was einen Eingriff entlang einem möglichst großen Kreisbogen und damit vergleichsweise geringe Flächenbelastungen oder Druckspitzen sicherstellen kann.

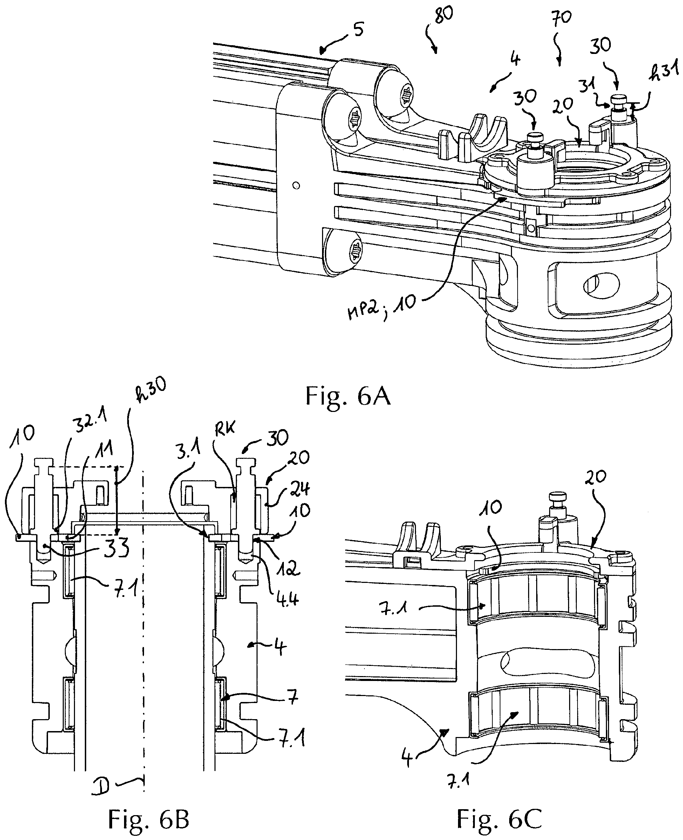

In den Figuren 6A, 6B, 6C ist ein Montageset gezeigt, mittels welchem die Montage einer Spindel an der Buchse 4 vereinfacht werden kann. Das Sicherungselement 10 ist zwischen der Buchse 4 und dem Deckel 20 gelagert, wobei im Deckel 20 jeweils für ein Sicherungselement ein Kupplungselement 30 gelagert ist, welches mit dem entsprechenden Sicherungselement 10 zusammenwirkt. Das Sicherungselement 10 ist in einer Sicherungsposition MP2 angeordnet. Die Buchse 4 ist bereits an einem Tragarm 5 montiert (angeschraubt), und die Kupplungselemente 30 befinden sich im Eingriff mit dem jeweiligen Sicherungselement 10. Mit anderen Worten: die Sicherungselemente 10 sind in einer Sicherungsposition angeordnet, und die Nut 31 des jeweiligen Kupplungselements 30 definiert ein Befestigungsmittel, an welchem eine Verkleidung montierbar ist. Die Nut 31 ist aufgrund des Eingriffs in das Sicherungselement 10 in der vordefinierten Höhe h31 angeordnet. In der Fig. 6A sind Komponenten eines Sicherungssystems 70 gezeigt, nämlich der Deckel 20, die Sicherungselemente 10 sowie die Kupplungselemente 30. Ferner sind Komponenten eines Montagesets 80 gezeigt, insbesondere umfassend die Buchse 4.

Aus der Figur 6B geht hervor, auf welche Weise die Sicherungselemente 10 in die Nut 3.1 der Spindel 3 eingreifen, während die Sicherungselemente 10 in der Sicherungsposition jeweils durch die Kupplungselemente 30 gesichert werden. Ein in einer von der entsprechenden Aufnahme 24 des Deckels 20 definierten Ringkavität RK angeordneter Kraftspeicher (insbesondere Schraubenfedern; nicht dargestellt) stellt sicher, dass das Kupplungselement 30 mittels des Eingriffsabschnitts 33 in die Bohrung 4.4 eingreift, insbesondere durch Ausüben einer Druckkraft auf die obere Auflagefläche 32.1. Die Sicherungsposition ist daran erkennbar, dass die erste Aussparung 11 radial innen vom Kupplungselement 30 angeordnet ist, wobei der Eingriffsabschnitt 33 in die zweite Aussparung 12 eingreift.

Die Nut 31 des Kupplungselements bzw. des Sicherungsstifts 30 ist in einer vordefinierten Höhe h30 in Bezug auf die Buchse 4 bzw. das Sicherungselement 10 angeordnet, in welcher der Sicherungsstift 30 maximal tief in die Buchse 4 eingreift (= Zielhöhe). Bei dieser Anordnung des/der Sicherungsstifte 30 kann eine Endmontage (z.B. einer Verkleidung) erfolgen. Innerhalb der Buchse 4 ist ein Drehgelenk oder Drehlager 7 gebildet, insbesondere durch einzelne Lagerelemente 7.1. Ist kein Sicherungselement 10 eingelegt, liegt diese Nut 31 in einer geringeren Höhe, so dass eine Verkleidung dann erst gar nicht einrasten kann und nicht montierbar ist.

Aus der Figur 6C geht hervor, dass das Sicherungselement 10 oberhalb von einem Lagerelement 7.1 angeordnet sein kann und dabei auch das Lagerelement 7.1 axial sichern kann. Dies erleichtert ebenfalls die Montage, insbesondere da das Lagerelement 7.1 von oben in die Buchse 4 eingelegt werden kann und daraufhin mittels des Sicherungselements 10 ohne das Erfordernis weiterer Komponenten in axialer Richtung gesichert werden kann.

In den Figuren 7A, 7B ist die weitere Sicherungsfunktion der Kupplungselemente 30 und der Sicherungselemente 10 in Hinblick auf eine Endmontage erkennbar. Ein Monteur kann eine Verkleidung 60 nur dann montieren, wenn die Sicherungselemente 10 bzw. die Kupplungselemente 30 in der Sicherungsposition angeordnet sind. Die Sicherungselemente 10 greifen in die Spindel 3 ein, und die Kupplungselemente 30 greifen sowohl in die Sicherungselemente 10 als auch in die Buchse 4 ein.

Die Verkleidung 60 ist in diesem Beispiel aus zwei Verkleidungsteilen/-hälften 60a, 60b gebildet, welche jeweils ein oder mehrere Befestigungsmittel 61 aufweisen, insbesondere Rippen, Haken, Rastmittel oder Klemmen, welche geometrisch korrespondierend zum Befestigungsabschnitt 31 ausgebildet und angeordnet sind.

Dank der Befestigungsmittel 61 kann ausgeschlossen werden, dass ein Monteur die Stativvorrichtung fertig montiert, ohne dass die Spindel 3 gesichert wäre. Zusammen mit den Sicherungselementen 10 und den Kupplungselementen 30 liefern die Befestigungsmittel 61 daher eine noch erhöhte Sicherheit und eine noch leichtere, selbsterklärendere Montage.

Aus der Figur 7B geht eine mögliche Variante für die Befestigungsmittel 61 hervor. Die Befestigungsmittel 61 zumindest abschnittsweise sind als Steg ausgebildet, an welchem eine Ausnehmung vorgesehen ist, in welcher die Nut 31 lagerbar ist. Die Ausnehmung weist kleinere Abmessungen auf als der Durchmesser d30 des Kupplungselements 30, so dass ein Eingriff nur dann möglich ist, wenn die Nut 31 auf Höhe des Stegs angeordnet ist.

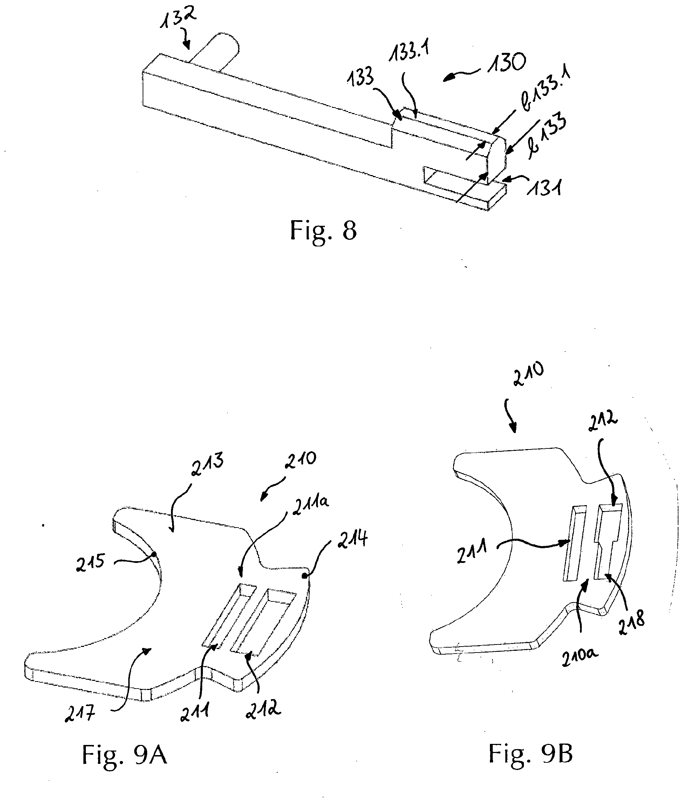

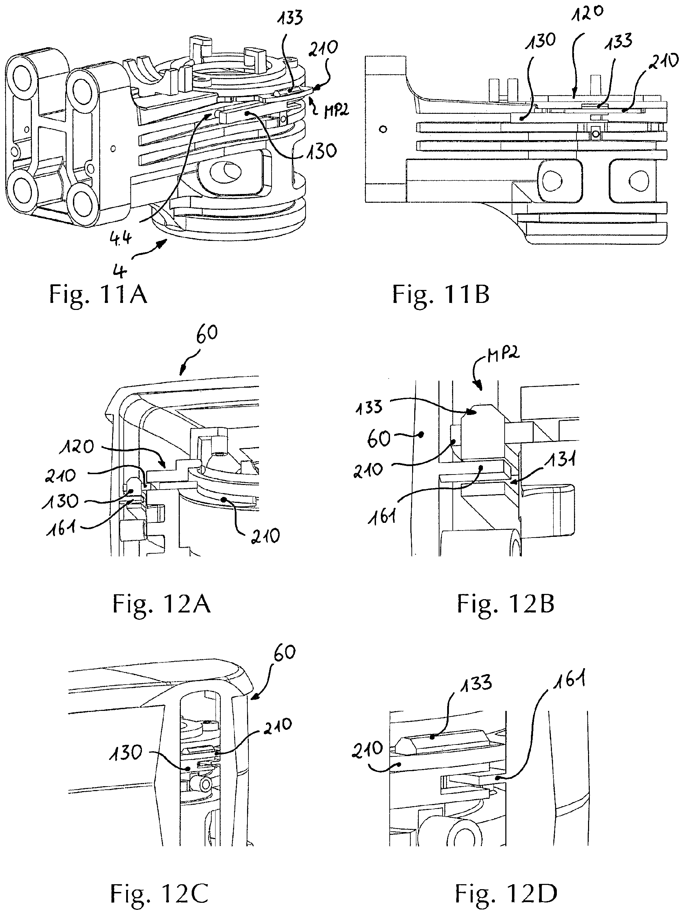

In der Figur 8 ist ein Kupplungselement 130 gemäß einem weiteren Ausführungsbeispiel gezeigt, insbesondere in der Form eines Riegels oder Hakens. Das Kupplungselement 130 weist im Bereich eines vorderen freien Endes einen Befestigungsabschnitt 131 in Form einer Ausnehmung (Spalt) auf. Dieser Befestigungsabschnitt 131 ist eingerichtet, mit einem Verkleidungsteil einer/der Stativvorrichtung zusammenzuwirken, wie im Zusammenhang mit Fig. 12A bis 12D näher erläutert. Im Bereich eines hinteren freien Endes weist der Riegel 130 einen Lagerungsabschnitt 132 mit einem Fortsatz Absatz auf, mittels welchem der Riegel an der Buchse gelagert werden kann.

Am vorderen freien Endes ist ein Eingriffsabschnitt 133 ausgebildet, welcher geometrisch korrespondierend sowohl zur ersten als auch zur zweiten Aussparung 211, 212 eines in der Fig. 9A gezeigten Sicherungselements 210 ausgebildet ist. Der Eingriffsabschnitt 133 weist eine hervorstehende Kante oder einen Rand 133.1 mit einer spezifischen Geometrie auf, insbesondere eine sich linear erstreckende Fase, welche derart dimensioniert ist, dass der Rand 133.1 mit der Fase an der ersten Aussparung 211 nur aufliegen kann, jedoch in die zweite Aussparung 212 vollständig eingreifen kann. Insbesondere weist der Eingriffsabschnitt 133 eine Breite b133 auf, welche größer ist als eine entsprechende Breite der ersten Aussparung 211, jedoch kleiner oder gleich als eine entsprechende Breite der zweiten Aussparung 212. Eine Breite b133.1 einer Stirnseite der Fase 133.1 ist kleiner als die entsprechende Breite der ersten Aussparung 211. Diese Konfiguration ermöglicht teilweisen Eingriff in die erste Aussparung oder zumindest positionsdefiniertes Aufliegen an der ersten Aussparung 211, ohne dass eine Verlagerung des Sicherungselements blockiert wird. Das Sicherungselement kann aus einer derartigen Montagevorbereitungsposition in eine Sicherungsposition verlagert werden, insbesondere durch Druck von außen.

In den Figuren 9A, 9B ist ein Sicherungselement 210 gemäß einem weiteren Ausführungsbeispiel gezeigt, welches jeweils einen ersten Kupplungsbereich 211 und einen zweiten Kupplungsbereich 212 aufweist. Der zweite Kupplungsbereich 212 ist größer/breiter als der erste Kupplungsbereich 211. Der zweite Kupplungsbereich 212 liegt radial außen vom ersten Kupplungsbereich 211.

Der erste Kupplungsbereich 211 kann dabei einen Transportsicherungsbereich 211a umfassen oder ausbilden, wie im Zusammenhang mit den zuvor beschriebenen Sicherungselementen 10; 110 bereits erläutert.

Das Sicherungselement 210 ist wie die zuvor beschriebenen Sicherungselemente 10; 110 als plattenartiges Segment mit gegenüberliegenden Gleitflächen 213 ausgebildet, welche dabei zumindest teilweise einen Lagerungsabschnitt 217 definieren. Das Sicherungselement 210 weist einen Eingriffsabschnitt 215 sowie eine Lasche 214 auf. Abgesehen von der Ausgestaltung der Kupplungsbereiche sind die Sicherungselemente 10; 110; 210 vergleichbar ausgebildet.

In der Figur 9B ist eine Variante des Sicherungselements 210 gezeigt, bei welcher Kupplungsbereiche exzentrisch angeordnet sind. Hierdurch weist das Sicherungselement 210 eine Seiten-Codierung 210a auf, so dass es eine vordefinierte Oberseite und eine vordefinierte Unterseite aufweist. Ein dritter Kupplungsbereich 218 definiert dabei bevorzugt eine Demontageposition, in welcher das Sicherungselement 210 bei der Demontage gesichert werden kann, indem das korrespondierende Kupplungselement nur teilweise in das Sicherungselement 210 eingreift. Hierzu ist der dritte Kupplungsbereich 218 schmaler als der zweite Kupplungsbereich 212 ausgebildet. Der zweite und dritte Kupplungsbereich 212, 218 bilden dabei eine Aussparung mit einem schmalen und einem breiten Abschnitt. Das Einrasten eines Riegels ist nur noch möglich, wenn eine von zwei Seiten (Ober- oder Unterseite) des Sicherungselements 210 nach oben angeordnet ist bzw. nach oben weist.

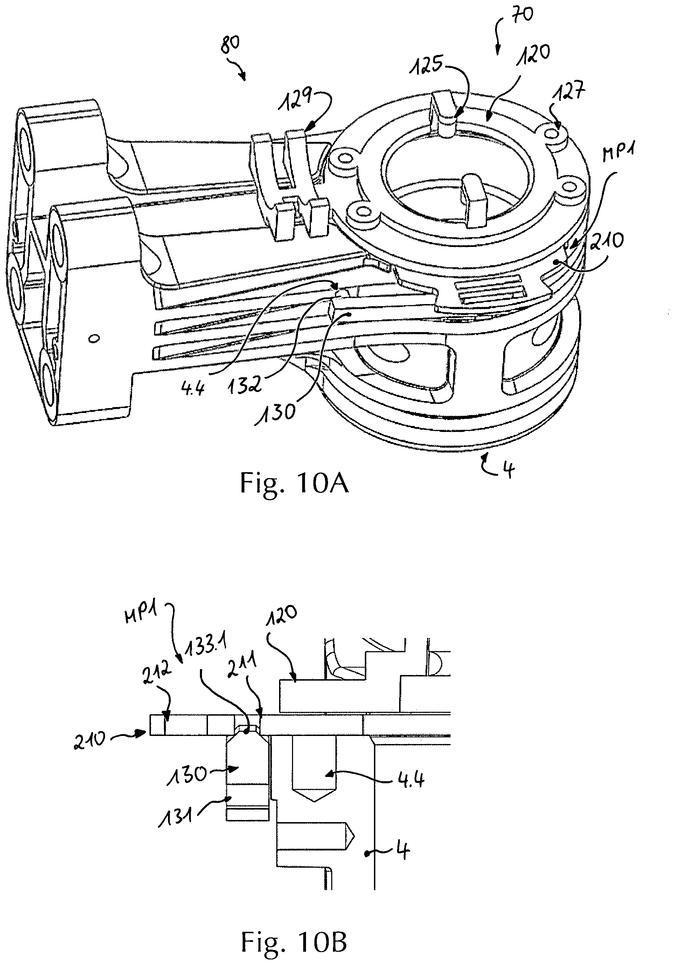

In den Figuren 10A, 10B ist eine Buchse 4 mit einem daran gelagerten Deckel 120 gezeigt, wobei das Sicherungselement 210 in einer Montagevorbereitungsposition MP1 zwischen dem Deckel 120 und der Buchse 4 gelagert und abgestützt ist, wie zuvor bereits beschrieben. Der Deckel 120 weist Radialfortsätze 125, Befestigungsmittel 127 sowie eine Kabelaufnahme 129 auf.

An der Buchse 4 ist ferner der Riegel 130 mittels des Lagerungsabschnitts 132 schwenkbar um eine vom Lagerungsabschnitt 132 definierte Drehachse in wenigstens zwei vordefinierten Schwenk-Positionen gelagert, insbesondere in einer Montagevorbereitungsposition (wie dargestellt) und in einer Sicherungsposition. Der Riegel 130 kann dabei z.B. mittels eines nicht näher dargestellten Kraftspeichers (insbesondere Schenkelfeder) vorgespannt gelagert sein, insbesondere durch Druck nach oben. Der Lagerungsabschnitt 132 kann dabei z.B. in einen an der Buchse 4 vorgesehenen Kupplungspunkt 4.4 (z.B. Sacklochbohrung; nicht dargestellt) eingreifen, welcher geometrisch korrespondierend zum Lagerungsabschnitt 132 ausgebildet ist.

In der Fig. 10A sind Komponenten eines Sicherungssystems 70 gezeigt, nämlich der Deckel 120, das bzw. die Sicherungselemente 210 sowie das bzw. die Kupplungselemente 130. Ferner sind Komponenten eines Montagesets 80 gezeigt, insbesondere umfassend die Buchse 4.

Figur 10B zeigt im Detail den teilweisen Eingriff des Riegels 130 in der Montagevorbereitungsposition im Schnittbild. Der Riegel 130 greift von unten in den Kupplungsbereich 211 ein. Wahlweise kann der Riegel 130 auch von oben eingreifen, was insbesondere in Hinblick auf mitwirkende Gravitationskräfte eine besonders sichere bzw. robuste Ausgestaltung des Sicherungsmechanismus ermöglicht.

Ist kein Sicherungselement 210 vorgesehen, kann der Riegel 130 sich weiter nach oben bzw. unten bewegen als wenn ein Sicherungselement vorgesehen wäre. Eine Rippe einer Verkleidung kann dann nicht in den Befestigungsabschnitt 131 des Sicherungselements 210 eingreifen, so dass die Verkleidung nicht montiert werden kann, wie im Zusammenhang mit Figuren 12A bis 12D erläutert.

In den Figuren 11A, 11B ist die Anordnung gemäß der Sicherungsposition MP2 gezeigt. Der Riegel 130 ist nach oben geschwenkt und derart angeordnet, dass der Eingriffsabschnitt 133 vollständig in die zweite Aussparung des Sicherungssegments 210 eingreift. Der Eingriffsabschnitt 133 ragt auf der oberen Seite des Sicherungssegments 210 vom Sicherungssegment hervor. Bei dieser Anordnung wird eine Spindel in axialer Richtung mittels des Sicherungssegments 210 gesichert, wobei das Sicherungssegment daran gehindert wird, sich radial nach außen oder innen zu verlagern. Die Radialposition des Sicherungssegments 210 wird durch den Riegel 130 blockiert.

In den Figuren 12A, 12B, 12C, 12D ist im Detail gezeigt, auf welche Weise auch mittels des Riegels 130 eine weitere Sicherungsfunktion bei der Endmontage einer Verkleidung 60 bereitgestellt werden kann. Das Sicherungselement 210 wie auch der Riegel 130 ist jeweils in der Sicherungsposition angeordnet. Der Riegel 130 ist nach oben geschwenkt, so dass der Befestigungsabschnitt/Spalt 131 auf derselben Höhe angeordnet ist wie ein Befestigungsmittel 161 der Verkleidung 60. Nur in dieser Sicherungsposition kann das Befestigungsmittel 161 (Rippe, Steg, Vorsprung) in den Befestigungsabschnitt 131 eingreifen, so dass eine Montage der Verkleidung 60 nur in dieser Anordnung möglich ist. Ist die Verkleidung einmal montiert worden, so kann mittels des Befestigungsmittels 161 auch eine zusätzliche Sicherung des Riegels 130 erfolgen. Mit anderen Worten: eine endmontierte Stativvorrichtung ist wie auch im zuvor beschriebenen Ausführungsbeispiel zusätzlich gesichert durch den Riegel 130 und die Verkleidung 60. Bei beiden beschriebenen Ausführungsbeispielen wird das Sicherungselement 10; 110; 210 dabei durch axialen Eingriff gesichert. Das Kupplungselement 30; 130 wird ebenfalls dadurch gesichert, dass eine Relativbewegung in axialer Richtung blockiert wird. Mit anderen Worten: durch eine Axialblockierung des Kupplungselements wird die Sicherheit erhöht und/oder wird die Montage vereinfacht.

Dank der Befestigungsmittel 161 kann ausgeschlossen werden, dass ein Monteur die Stativvorrichtung fertig montiert, ohne dass die Spindel 3 gesichert wäre. Denn in diesem Fall würde das Sicherungselement 210 verhindern, dass der Riegel 130 von der Montagevorbereitungsposition in die Sicherungsposition verlagert werden kann. Für den Fall, dass gar keine Sicherungselemente vorgesehen wurden, z.B. falls diese vergessen wurden, kann eine Sichtprüfung der Position der Sicherungsstifte eine Überprüfung ermöglichen, wie im Zusammenhang mit Figur 6B oder Figur 10B erläutert.

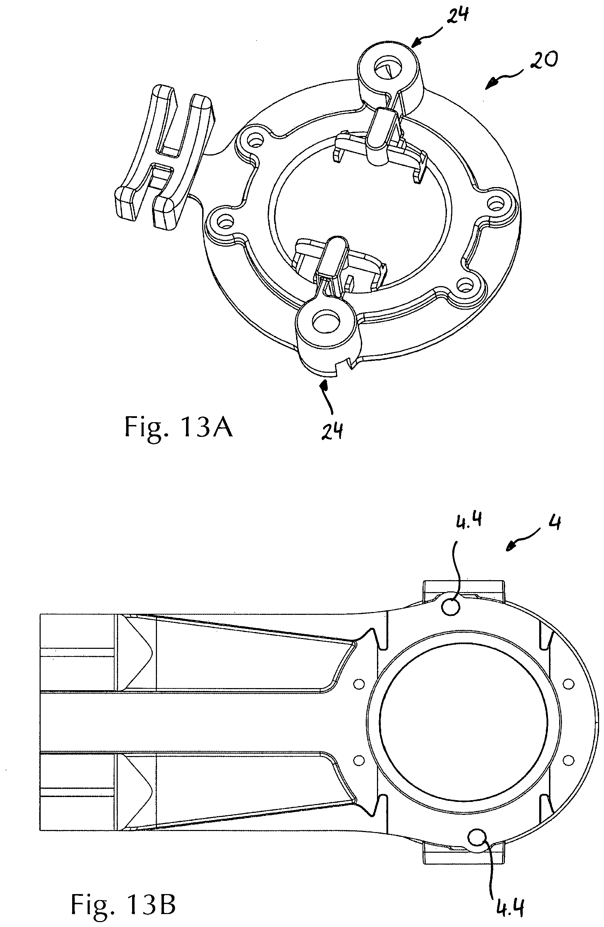

In den Figuren 13A und 13B ist jeweils eine Variante des zuvor beschriebenen Deckels 20 bzw. der zuvor beschriebenen Buchse 4 für ein Sicherungselement mit Codierung gezeigt. Die Aufnahmen 24 sind mit einer Exzentrizität bzw. einem Versatz in Umfangsrichtung entsprechend der Exzentrizität der Kupplungsbereiche des korrespondierenden Sicherungselements angeordnet. Die Kupplungspunkte 4.4 sind entsprechend angeordnet.

### Bezugszeichenliste

- 1: Stativvorrichtung, insbesondere Deckenstativvorrichtung
- 3: Zapfen (z.B. für Monitor, oder Tragarmzapfen) bzw. (Hohl-)Spindel
- 3.1: Eingriffsabschnitt an Zapfen/Spindel, insbesondere umlaufende Nut
- 4: Lagerungseinrichtung, insbesondere Buchse zur Lagerung von Tragarm oder medizintechnischer Einrichtung
- 4.1: Ausnehmung, Ausfräsung, Einfräsung oder Formkontur
- 4.2: Lagerungsabschnitt, insbesondere mit mindestens einer Lagerfläche
- 4.2a: Absatz oder Führungskante
- 4.3: Auflagefläche für Deckel
- 4.4: Kupplungspunkt, insbesondere Bohrung
- 4.5: Befestigungsmittel, insbesondere Gewindebohrung
- 4.6: Innenmantelfläche
- 4.7: Montageabschnitt, insbesondere mit Durchgangsbohrungen
- 5: Tragarm oder Federarm
- 7: Drehgelenk oder Drehlager
- 7.1: einzelnes Lagerelement, insbesondere Rollenlager oder Kugellager
- 10; 110; 210: Sicherungselement, insbesondere Sicherungssegment
- 10a; 210a: Codierung, insbesondere unsymmetrischer Abschnitt des Sicherungssegments, insbesondere seitenbezogene "Codierung"
- 11; 111; 211: erster Kupplungsbereich oder Kupplungspunkt (z.B. Aussparung), insbesondere kleiner als Kupplungselement(-Durchmesser)
- 11a; 111a; 211a: Transportsicherungsbereich
- 12; 112; 212: zweiter Kupplungsbereich oder Kupplungspunkt (z.B. Aussparung), insbesondere größer oder gleich Kupplungselement(-Durchmesser)
- 13; 113; 213: Gleitfläche, Gleitflächenabschnitt oder Gleitschicht des Sicherungselements
- 14; 114; 214: Lasche, insbesondere für manuelle Betätigung eingerichtete Grifflasche
- 15; 115; 215: Eingriffsabschnitt, insbesondere Kreisbogenflächenabschnitt oder konkaver Krümmungsabschnitt
- 16: weitere Aussparung für Montagezwecke, insbesondere korrespondierend zu Werkzeuggeometrie
- 17; 117; 217: Lagerungsabschnitt, insbesondere umfassend gegenüberliegende Flächenabschnitte
- 18; 218: dritter Kupplungsbereich oder Kupplungspunkt (z.B. Aussparung), insbesondere in der Größe des Kupplungselements(-Durchmessers)
- 19: Demontage-Schlitz
- 20; 120: Deckel, insbesondere Deckelring
- 21: zumindest abschnittsweise ebene Unterseite, insbesondere Auflagefläche und/oder Lagerfläche
- 21a: Lagerfläche, insbesondere ebener Gleitflächenabschnitt
- 21b: Auflageflächenabschnitt
- 24: Aufnahme, insbesondere Topf oder rohrartiger Dom
- 24.1: Absatz
- 25; 125: Radialfortsatz
- 27; 127: Befestigungsmittel
- 29; 129: Kabelaufnahme bzw. Kabellagerungsabschnitt
- 30; 130: Kupplungselement, insbesondere Sicherungsstift, oder Haken, Riegel
- 31; 131: Befestigungsabschnitt, speziell Befestigungsabschnitt korrespondierend zu Befestigungsmitteln an Verkleidung, insbesondre Nut oder Aussparung, bevorzugt Schlitz oder umlaufende Nut in vordefinierter (axialer) Höhenposition
- 32: Ringabschnitt des Sicherungsstifts
- 32.1: obere Auflagefläche
- 132: Lagerungsabschnitt, insbesondere Bolzen oder Zapfen
- 33; 133: Eingriffsabschnitt, insbesondere geometrisch korrespondierend zu Kupplungsbereich des Sicherungselements
- 33.1: freies Ende, insbesondere Fase
- 50: Kraftspeicher (z.B. Schraubenfeder oder Schenkelfeder), beispielsweise elastisch vorgespannt gelagert am Deckel oder an der Buchse
- 60: Verkleidung
- 60a: erste Verkleidungshälfte
- 60b: zweite Verkleidungshälfte
- 61; 161: Befestigungsmittel, z.B. Rippe an/in Verkleidung, insbesondere in vordefinierter Höhenposition angeordnetes Befestigungsmittel
- 70: Sicherungssystem
- 80: Montageset
- b133: Breite des Eingriffsabschnitts
- b133.1: Breite einer Stirnseite des Eingriffsabschnitts
- d12; d112: Durchmesser des zweiten Kupplungsbereichs
- d30: Durchmesser des Kupplungselements an einem oberen freien Ende bzw. einem Betätigungsabschnitt
- d33: Durchmesser des Eingriffsabschnitts
- d33.1: Durchmesser eines freien Endes, insbesondere einer Fase des Eingriffsabschnitts
- D: Drehachse, insbesondere vertikal ausgerichtete Hochachse
- h30: vordefinierte Höhe des Sicherungsstifts in Bezug auf die Buchse
- h31: Höhe der Nut des Sicherungsstifts
- K24: Kavität zur Aufnahme eines Kupplungselements
- M: Mittenlängsachse des Sicherungselements, insbesondere zentrisch in Bezug auf eine Breite in Umfangsrichtung angeordnete Achse
- MP1: Montagevorbereitungsposition
- MP2: gesicherte Position für Betrieb
- R1, R2: Radius des Sicherungssegments, insbesondere korrespondierend zu Zapfengeometrie
- RK: Ringkavität zur Aufnahme eines Kraftspeichers/Federelements im Topf/Dom

## Patentansprüche

1. Sicherungselement (10; 110; 210) für eine medizintechnische Stativvorrichtung (1) eingerichtet zur Anordnung im Operationssaal und zum Positionieren einer medizintechnischen Einrichtung, umfassend
- einen Lagerungsabschnitt (17; 117; 217) eingerichtet zum Anordnen des Sicherungselements in einer vordefinierten Axialposition an einer Lagerungseinrichtung, insbesondere Buchse (4) der Stativvorrichtung;
- einen Eingriffsabschnitt (15; 115; 215) eingerichtet zum Zusammenwirken mit einer in der Lagerungseinrichtung um eine Drehachse (D) drehlagerbaren Spindel oder einem Zapfen (3) der Stativvorrichtung, um die Spindel oder den Zapfen in der vordefinierten Axialposition relativ zur Lagerungseinrichtung drehbar innerhalb der Lagerungseinrichtung zu sichern;
wobei das Sicherungselement (10; 110; 210) eingerichtet ist, in wenigstens zwei vom Sicherungselement vordefinierten Radialpositionen an der Lagerungseinrichtung gelagert zu sein, und zwar in einer Montagevorbereitungsposition (MP1) und/oder in einer Sicherungsposition (MP2), wobei der Eingriffsabschnitt (15; 115; 215) zum Zusammenwirken mit der Spindel oder dem Zapfen durch Eingriff in radialer Richtung eingerichtet ist, insbesondere in der Sicherungsposition,
**dadurch gekennzeichnet, dass**
das Sicherungselement einen Kupplungsbereich (11; 111; 211) in Form einer Aussparung aufweist, welche die Montagevorbereitungsposition (MP1) definiert, und wobei das Sicherungselement einen Kupplungsbereich (12; 112; 212) in Form einer weiteren Aussparung aufweist, welche die Sicherungsposition (MP2) definiert.

2. Sicherungselement nach Anspruch 1, wobei die weitere Aussparung größer ist als die Aussparung.

3. Sicherungselement nach Anspruch 1 oder 2, wobei das Sicherungselement wenigstens einen, bevorzugt wenigstens zwei Kupplungsbereiche (11, 12; 111, 112; 211, 212) aufweist, welche jeweils eine der vordefinierten Radialpositionen definieren.

4. Sicherungselement nach einem der vorhergehenden Ansprüche, wobei das Sicherungselement wenigstens einen exzentrisch bezüglich einer Mittenlängsachse (M) des Sicherungselements oder bezüglich einer Erstreckung des Sicherungselements in Umfangsrichtung angeordneten Kupplungsbereich (11, 12; 111, 112; 211, 212) aufweist.

5. Sicherungselement nach einem der vorhergehenden Ansprüche, wobei das Sicherungselement eine Unterseite und eine Oberseite aufweist, welche geometrisch identisch zueinander ausgebildet sind, wobei das Sicherungselement bevorzugt als plattenförmiges und/oder kreisscheibensegmentförmiges und/oder ringsegmentförmiges Segment ausgebildet ist, insbesondere mit parallel zueinander ausgerichteten Ober- und Unterseiten.

6. Medizintechnische Stativvorrichtung zur Anordnung im Operationssaal, mit wenigstens einem Sicherungselement (10; 110; 210) nach einem der Ansprüche 1 bis 5, ferner umfassend wenigstens eine Buchse (4) und wenigstens eine(n) in der Buchse drehgelagerte Spindel oder Zapfen (3) jeweils zur Lagerung einer medizintechnischen Einrichtung und/oder eines Tragarms der Stativvorrichtung, wobei die Spindel und/oder der Zapfen mittels des Sicherungselements in einer vordefinierten Axialposition relativ zur Buchse gesichert ist, und wobei das Sicherungselement in einer vordefinierten Radialposition mittels wenigstens einem an der Buchse gelagerten Kupplungselement und/oder einem an einem an der Buchse montierten Deckel (20; 120) gelagerten Kupplungselement (30; 130) gesichert ist, welches formschlüssig in axialer Richtung in das Sicherungselement eingreift.

7. Medizintechnische Stativvorrichtung (1) nach Anspruch 6, wobei die Buchse eine Drehachse (D) für eine Drehbewegung einer Spindel oder eines Zapfens (3) der Stativvorrichtung definiert, wobei die Buchse einen Lagerungsabschnitt (4.2) eingerichtet zum Anordnen und axialen Abstützen des Sicherungselements, insbesondere eines Sicherungselements (10; 110; 210) nach einem der vorhergehenden auf ein Sicherungselement gerichteten Ansprüche, in einer vordefinierten Axialposition an der Buchse sowie eingerichtet zum Führen des Sicherungselements in radialer Richtung zumindest annähernd orthogonal zur Drehachse aufweist, wobei die Buchse einen Kupplungsbereich (4.4) aufweist, in welchem das mit dem Sicherungselement kuppelbare Kupplungselement (30; 130) zur Sicherung des Sicherungselements lagerbar ist.

8. Medizintechnische Stativvorrichtung (1) nach Anspruch 7, wobei die Buchse eingerichtet ist, mit dem Deckel (20; 120) ein Lager für das Sicherungselement zu bilden, wobei die Buchse bevorzugt an einer Oberseite eine Auflagefläche (4.3) aufweist, die mindestens abschnittsweise geometrisch korrespondierend zu einer Unterseite des Deckels ausgebildet ist.

9. Medizintechnische Stativvorrichtung (1) nach Anspruch 6, wobei der Deckel einen Lagerungsabschnitt (21, 21a, 21b) eingerichtet zum Anordnen und Abstützen des Sicherungselements (10; 110; 210) in einer vordefinierten Axialposition am Deckel, insbesondere an einer Unterseite des Deckels, sowie eingerichtet zum Führen des Sicherungselements in der Axialposition in radialer Richtung aufweist.

10. Verwendung eines Sicherungselements (10; 110; 210) nach einem der Ansprüche 1-5, an einer Buchse (4) zum Sichern einer Spindel oder eines Zapfens (3) in einer vordefinierten Axialposition an der Buchse, an einer medizintechnischen Stativvorrichtung (1) eingerichtet zur Anordnung im Operationssaal, wobei das Sicherungselement in einer vordefinierten Axialposition an der Buchse in wenigstens zwei unterschiedlichen mittels des Sicherungselements vordefinierten Radialpositionen (MP1, MP2) lagerbar ist und derart in einer der Radialpositionen angeordnet wird, dass das Sicherungselement in radialer Richtung in die Spindel bzw. den Zapfen eingreift und die Spindel bzw. der Zapfen in axialer Richtung relativ zur Buchse sichert.

11. Verwendung eines Sicherungselements (10; 110; 210) nach einem der Ansprüche 1-5 an einer Buchse (4) als Transportsicherung und angeordnet in einer vordefinierten Radialposition (MP1), bei einer medizintechnischen Stativvorrichtung (1) eingerichtet zur Anordnung im Operationssaal, wobei das Sicherungselement derart in der vordefinierten Radialposition (MP1) an der Buchse (4) angeordnet wird, dass das Sicherungselement die Buchse in radialer Richtung nach innen nicht oder nicht weiter überragt als ein Durchmesser einer in der Buchse anordenbaren Spindel bzw. eines Zapfens (3), wobei das Sicherungselement mittels eines elastisch vorgespannt gelagerten Kupplungselements (30; 130) in der Radialposition (MP1) gesichert wird, insbesondere durch Eingriff in axialer Richtung.

12. Verwendung eines Sicherungselements (10; 110; 210) nach einem der Ansprüche 1-5 bei der Montage/Demontage einer Stativvorrichtung (1) eingerichtet zur Anordnung im Operationssaal, wobei das Sicherungselement nacheinander in wenigstens zwei unterschiedlichen vordefinierten Radialpositionen (MP1, MP2) an einer Buchse (4) der Stativvorrichtung positioniert und in der jeweiligen Radialposition gesichert wird, insbesondere bei der Montage zunächst in einer radial weiter außen liegenden Montagevorbereitungsposition (MP1) und dann in einer radial weiter innen liegenden Sicherungsposition (MP2), oder bei der Demontage zunächst in einer umgedrehten Anordnung in einer/der Sicherungsposition (MP2) und dann in einer/der Montagevorbereitungsposition (MP1).

## Claims

1. A securing element (10; 110; 210) for a medical stand device (1) configured for arrangement in an operating room and for positioning a medical device, comprising
- a supporting portion (17; 117; 217) configured for arranging the securing element in a predefined axial position on a supporting apparatus, in particular a bushing (4) of the stand device;
- an engagement portion (15; 115; 215) configured for interacting with an around an axis of rotation (D) in a supporting apparatus rotatably supportable spindle or a pin (3) of the stand device to secure the spindle or the pin rotatably in the predefined axial position relative to the supporting apparatus within the supporting apparatus;
wherein
the securing element (10; 110; 210) is configured to be supported in at least two radial positions predefined by the securing element on the supporting apparatus, which means in a mounting preparation position (MP1) and/or in a securing position (MP2), wherein the engagement portion (15; 115; 215) is configured for interacting with the spindle or the pin by engagement in the radial direction, in particular in the securing position,
**characterized in that**
the securing element comprises a coupling portion (11; 111; 211) formed as a recess, which defines the mounting preparation position (MP1) and wherein the securing element comprises a coupling portion (12; 112; 212) formed as a further recess which defines the securing position (MP2).

2. The securing element according to claim 1, wherein the further recess is larger than the recess

3. The securing element according to claim 1 or 2, wherein the securing element comprises at least one, preferably at least two coupling sections (11, 12; 111, 112; 211, 212) each defining one of the predefined radial positions.

4. The securing element according to any one of the preceding claims, wherein the securing element comprises at least one coupling portion (11, 12; 111, 112; 211, 212) arranged eccentrically in relation to a central longitudinal axis (M) of the securing element or in relation to an extension of the securing element in the peripheral direction.

5. The securing element according to any one of the preceding claims, wherein the securing element comprises a lower side and an upper side, which are formed geometrically identical to each other, wherein the securing element is preferably formed in the shape of a plate and/or disk segment and/or annular segment, in particular with upper and lower sides that are aligned parallel to each other.

6. A medical stand device for arrangement in the operating room, including at least one securing element (10; 110; 210) according to any one of the preceding claims 1 to 5, further comprising at least one bushing (4) and at least one spindle or pin (3) rotatably supported in the bushing for supporting a medical device and/or a carrier arm of the stand device, respectively, wherein the spindle and/or the pin are secured by means of the securing element in a predefined axial position in relation to the bushing, and wherein the securing element is secured in a predefined radial position by means of at least one coupling element supported on the bushing and/or coupling element (30;130) supported on a cover (20; 120) mounted on the bushing, which engages with the securing element in a form-fitting way in the axial direction.

7. The medical stand device (1) according to claim 6, wherein the bushing defines an axis of rotation (D) for a rotational movement of a spindle or a pin (3) of the stand device, wherein the bushing comprises a supporting portion (4.2) configured for arranging and axially holding a securing element, in particular a securing element (10; 110; 210) according to any one of the preceding claims regarding a securing element, in a predefined axial position on the bushing, and is configured for guiding the securing element in the radial direction at least approximately orthogonally to the axis of rotation, wherein the bushing comprises a coupling portion (4.4), in which the coupling element (30; 130) that is coupable with the securing element is supportable in order to secure the securing element.

8. The medical stand device (1) according to claim 7, wherein the bushing is configured for forming a support for the securing element with a cover (20; 120), wherein the bushing preferably comprises a contact surface (4.3) on an upper side that is formed to correspond geometrically to a lower side of the cover at least in sections.

9. The medical stand device (1) according to claim 6, wherein the cover comprises a supporting portion (21, 21a, 21b) configured for arranging and holding the securing element (10; 110; 210) on the cover in a predefined axial position, in particular on the lower side of the cover, and configured for guiding the securing element in the axial position in the radial direction.

10. Use of a securing element (10; 110; 210) according to any one of claims 1 to 5 on a bushing (4) for securing a spindle or a pin (3) in a predefined axial position on the bushing, on a medical stand device (1) configured for arrangement in the operating room, wherein the securing element is supportable in a predefined axial position on the bushing in at least two different radial positions (MP1, MP2) predefined by means of the securing element, and is arranged in one of the radial positions in such a manner that the securing element engages with the spindle or pin, respectively, in the radial direction and secures the spindle or the pin, respectively, in the axial direction in relation to the bushing.

11. Use of a securing element (10; 110; 210) according to any one of claims 1 to 5 on a bushing (4) as transport lock and arranged in a predefined radial position (MP1), for a medical stand device (1) configured for arrangement in the operating room, wherein the securing element is arranged on the bushing (4) in a predefined radial position (MP1) in such a manner that the securing element does not project beyond the bushing inwards in the radial direction or does not project further than a diameter of a spindle or pin (3), respectively, arrangeable in the bushing, wherein the securing element is secured in the radial position (MP1) by means of a coupling element (30; 130) that is supported in an elastically biased way, in particular by engagement in the axial direction.

12. Use of a securing element (10; 110; 210) according to any one of claims 1 to 5 in mounting/dismounting of a stand device (1) configured for arrangement in the operating room, wherein the securing element is positioned sequentially in at least two different predefined radial positions (MP1, MP2) on a bushing (4) of the stand device, and is secured in the respective radial position, in particular during mounting initially in a mounting preparation position (MP1) disposed radially further outwards, and then in a securing position (MP2) disposed radially further inwards, or during dismounting initially in an inverted arrangement in a/the securing position (MP2) and then in a/the mounting preparation position (MP1).

## Revendications

1. Élément de fixation (10; 110; 210) pour un dispositif de support médico-technique (1) agencé pour être disposé dans la salle d'opération et pour positionner un dispositif médico-technique, comprenant
- une section de palier (17; 117; 217) agencée pour agencer l'élément de fixation dans une position axiale prédéfinie sur un moyen de palier, en particulier une douille (4) du dispositif de support;
- une partie d'engagement (15; 115; 215) adaptée pour coopérer avec une broche ou un tourillon (3) du dispositif tripode pouvant pivoter dans le moyen de palier autour d'un axe de rotation (D) pour fixer la broche ou le tourillon dans la position axiale prédéfinie par rapport au moyen de palier dans le moyen de palier ;
l'élément de fixation (10; 110; 210) est agencé pour être monté sur le moyen de palier dans au moins deux positions radiales prédéfinies par l'élément de fixation, à savoir dans une position de préparation de montage (MP1) et/ou dans une position de fixation (MP2), la partie d'engagement (15; 115; 215) étant conçue pour coopérer avec la broche ou l'axe par engagement dans le sens radial, notamment dans la position de fixation,
**caractérisé en ce que**
l'élément de fixation ayant une région d'accouplement (11; 111; 211) sous la forme d'un évidement définissant la position de préparation de montage (MP1), et l'élément de fixation ayant une région d'accouplement (12; 112; 212) sous la forme d'un autre évidement définissant la position de fixation (MP2).

2. Élément de fixation selon la revendication 1, l'autre évidement étant plus grand que l'évidement.

3. Élément de fixation selon la revendication 1 ou 2, l'élément de fixation présentant au moins une, de préférence au moins deux zones d'accouplement (11, 12; 111, 112; 211, 212) qui définissent chacune une des positions radiales prédéfinies.

4. Élément de fixation selon l'une des revendications précédentes, l'élément de fixation présentant au moins une zone d'accouplement (11, 12; 111, 112; 211, 212) disposée excentriquement par rapport à un axe longitudinal central (M) de l'élément de fixation ou par rapport à une extension de l'élément de fixation dans la direction périphérique.

5. Elément de fixation selon l'une des revendications précédentes, dans lequel l'élément de fixation présente une face inférieure et une face supérieure qui sont géométriquement identiques l'une à l'autre, l'élément de fixation étant de préférence réalisé sous la forme d'un segment en forme de plaque et/ou de disque circulaire en forme de segment et/ou de segment annulaire, en particulier avec les faces supérieure et inférieure parallèles l'une à l'autre.

6. Dispositif de support médico-technique pour le montage dans la salle d'opération, comportant au moins un élément de fixation (10; 110; 210) selon l'une quelconque des revendications 1 à 5, comprenant en outre au moins une douille (4) et au moins une broche ou un tourillon (3) monté rotatif dans la douille, chacun pour monter un dispositif médico-technique et/ou un bras de support du dispositif de support, dans lequel la broche et/ou le tourillon est fixé au moyen de l'élément de fixation dans une position axiale prédéterminée relativement à la douille et l'élément de fixation est fixé dans une position radiale prédéterminée par au moins un élément de couplage monté sur la douille et/ou un couvercle (20; 120) monté sur une douille, qui s'engage positivement dans la direction axiale dans l'élément de fixation.

7. Dispositif de support médico-technique (1) selon la revendication 6, dans lequel la douille définit un axe de rotation (D) pour un mouvement de rotation d'une broche ou d'un tourillon (3) du dispositif de support, dans lequel la douille définit un section porteuse (4.2) prévu pour agencer et supporter axialement l'élément de fixation, en particulier un élément de fixation (10; 110; 210) selon l'une des revendications précédentes dirigé vers un élément de fixation, dans une position axiale prédéfinie sur la douille et prévu pour guider l'élément de fixation dans la direction radiale au moins approximativement orthogonale à l'axe de rotation, la douille ayant une région d'accouplement (4.4) dans laquelle peut être monté l'élément de couplage (30; 130) qui peut être couplé à l'élément de fixation pour la fixation.

8. Dispositif de support médico-technique (1) selon la revendication 7, dans lequel la douille est agencée pour former un palier pour l'élément de fixation avec le couvercle (20 ; 120), dans lequel la douille présente de préférence sur un côté supérieur une surface d'appui (4.3) qui est formée géométriquement correspondant à une face inférieure du couvercle au moins par sections.

9. Dispositif de support médico-technique (1) selon la revendication 6, dans lequel le couvercle présente une section de support (21, 21a, 21b) agencée pour agencer et supporter l'élément de fixation (10; 110; 210) dans une position axiale prédéfinie sur le couvercle, en particulier sur une face inférieure du couvercle, et agencée pour guider l'élément de fixation en position axiale dans la direction radiale.

10. Utilisation d'un élément de fixation (10; 110; 210) selon l'une des revendications 1-5, sur une douille (4) pour fixer une broche ou un tourillon (3) dans une position axiale prédéfinie sur la douille, sur un dispositif de support medio-technique (1) prévu pour être disposé dans la salle d'opération, l'élément de fixation dans une position axiale prédéfinie sur la douille dans au moins deux positions radiales différentes (MP1, MP2) prédéfinies au moyen de l'élément de fixation peuvent être mémorisées et sont disposées dans l'une des positions radiales de telle sorte que l'élément de fixation est disposé dans la direction radiale engage la broche on le tourillon dans la direction radiale et fixe la broche ou le tourillon dans la direction axiale par rapport à la douille.

11. Utilisation d'un élément de fixation (10; 110; 210) selon l'une des revendications 1 à 5 sur une douille (4) comme moyen de fixation de transport et disposé dans une position radiale prédéfinie (MP1) sur un dispositif de support technique médical (1) disposé pour être disposé dans le bloc opératoire, l'élément de fixation étant disposé dans la position radiale prédéfinie (MP1) de la douille (4), de manière que l'élément de fixation ne dépasse pas la douille dans le sens radial, ni ne dépasse le diamètre de la broche ou de la broche qui peuvent être disposées dans la douille, dans le sens radial. d'une goupille (3), l'élément de fixation étant fixé en position radiale (MP1) au moyen d'un élément d'accouplement (30; 130) monté précontraint élastiquement, en particulier par engagement dans le sens axial.

12. Utilisation d'un élément de secours (10; 110; 210) selon l'une des revendications 1-5 lors du montage/démontage d'un dispositif de support (1) prévu pour être monté dans la sale d'opération, l'élément de fixation étant positionné successivement dans au moins deux positions radiales prédéfinies différentes (MP1, MP2) sur une douille (4) du dispositif de support et fixé dans la position radiale respective, en particulier pendant le montage, d'abord dans une position de préparation de montage (MP1) radialement plus à l'extérieur, puis dans une position de fixation (MP2) radialement plus à l'intérieur, ou pendant le démontage, d'abord en position inversée dans une ou plusieurs positions de fixation (MP2) et ensuite dans une ou plusieurs positions de préparation de montage (MP1).
